(19)

Europäisches
Patentamt
European
Patent Office
Office européen
des brevets

(11)     **EP 1 466 927 B1**

(12)                                **EUROPEAN PATENT SPECIFICATION**

(45) Date of publication and mention
of the grant of the patent:
**28.03.2007   Bulletin 2007/13**

(51) Int Cl.:
***C08F 2/01*** *(2006.01)*          ***C08F 20/04*** *(2006.01)*

(21) Application number: **02785953.7**

(22) Date of filing: **28.11.2002**

(86) International application number:
**PCT/JP2002/012410**

(87) International publication number:
**WO 2003/057737 (17.07.2003 Gazette 2003/29)**

(54) **PROCESS FOR PRODUCTION OF CARBOXYLIC ACID POLYMERS**

VERFAHREN ZUR HERSTELLUNG VON CARBONSÄUREPOLYMEREN

PROCEDE DE PRODUCTION DE POLYMERES D'ACIDE CARBOXYLIQUE

(84) Designated Contracting States:
**DE ES FR**

(30) Priority: **28.12.2001   JP 2001399142**

(43) Date of publication of application:
**13.10.2004   Bulletin 2004/42**

(73) Proprietor: **KAO CORPORATION**
**Tokyo 103-8210 (JP)**

(72) Inventors:
• **TAMAKI, Seiji,**
**Kao Corporation**
**Wakayama-shi,**
**Wakayama 640-8580 (JP)**
• **KAMEI, Kouji,**
**Kao Corporation**
**Wakayama-shi,**
**Wakayama 640-8580 (JP)**
• **OSAKI, Kazutomo,**
**Kao Corporatio**
**Wakayama-shi,**
**Wakayama 640-8580 (JP)**
• **NAITOU, Kazuki,**
**Kao Corporation**
**Wakayama-shi,**
**Wakayama 640-8580 (JP)**

• **KANO, Kenji,**
**Kao Corporation**
**Wakayama-shi,**
**Wakayama 640-8580 (JP)**
• **YOSHIMURA, Tadanori,**
**Kao Corporation**
**Wakayama-shi,**
**Wakayama 640-8580 (JP)**
• **TANAKA, Nobushige,**
**Kao Corporation**
**Wakayama-shi,**
**Wakayama 640-8580 (JP)**
• **HIRAMATSU, Shinobu,**
**Kao Corporation**
**Wakayama-shi,**
**Wakayama 640-8580 (JP)**

(74) Representative: **HOFFMANN EITLE**
**Patent- und Rechtsanwälte**
**Arabellastrasse 4**
**81925 München (DE)**

(56) References cited:
**EP-A- 0 224 133          JP-A- 9 067 404**
**JP-A- 62 091 506          JP-A- 2001 055 407**
**JP-A- 2001 098 002          JP-B- 2 024 283**

• **PATENT ABSTRACTS OF JAPAN vol. 005, no. 114 (C-064), 23 July 1981 (1981-07-23) & JP 56 055407 A (NIPPON SHOKUBAI KAGAKU KOGYO CO LTD), 16 May 1981 (1981-05-16)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

TECHNICAL FIELD

The present invention relates to a process for preparing a carboxylic acid-based polymer. More specifically, the present invention relates to a process for preparing a carboxylic acid-based polymer which can be suitably used as a builder for a detergent, a dispersant, a scale inhibitor and the like.

BACKGROUND ART

As a process for preparing a carboxylic acid-based polymer comprising carrying out polymerization in the presence of redox initiators, a hydrogensulfite and oxygen, there have been known a process comprising carrying out a polymerization reaction by means of a dropping method in an agitated tank reactor (Japanese Examined Patent Publication No. Sho 60-24806), and a process comprising forming a thin film stream in a reaction tube and carrying out a polymerization reaction (Japanese Examined Patent Publication No. Hei 02-24283).

However, in the former process, in a case of scale-up, it is necessary to lower the solid concentration since the control of diameters of gas bubbles becomes difficult, and in a case of obtaining a low-molecular weight polymer, it is necessary to increase the amount of the initiator. Therefore, there is a defect in the process that productivity is lowered, and that the ratio of impurities formed is increased.

Also, there is a defect in the latter process that a tremendous volume of gas is required in order to form a thin film stream in the reaction tube.

As polymerization processes other than those mentioned above, there has been known a process comprising carrying out the continuous mixing of monomers and a redox initiator with a static mixer, and thereafter feeding the mixture to an appropriate polymerization vessel (Japanese Examined Patent Publication No. Sho 60-8001).

However, there are some defects in this process that a redox initiator is required to be in a liquid state at the stage of its introduction into the mixer, so that an initial reaction rate becomes larger and restraints are imposed on specifications of a mixer and a process of feeding the initiator for prevention of blocking.

As processes for continuously preparing an acrylate-based polymer, there have been known a process comprising preparing the polymer using a loop reactor equipped with a static mixer (Japanese Patent Laid-Open No. Sho 60-28409), and a process comprising preparing the polymer using a loop reactor equipped with a static mixer and a recycle tank (Japanese Patent Laid-Open No. 2001-98001).

However, there are some defects in the former process that productivity is low and that circulation cannot be accomplished when a gas-liquid system is handled since a separation mechanism for gas is insufficient.

Also, in the latter process, when a hydrogensulfite and oxygen are used as redox initiators, the initiator and monomers are directly fed into a loop, so that an initial reaction is carried out in the state that a highly viscous water-soluble polymer is circulated. Consequently, the polymerization reaction cannot be carried out in a high initiator efficiency, thereby increasing the amount of impurities. Therefore, when the amount of the initiator is increased and the molecular weight is lowered in order to lower the viscosity of the water-soluble polymer for increasing the initiator efficiency, there is a defect that the amount of impurities derived from the initiator also increases, while the productivity is lowered when a concentration of the water-soluble polymer is decreased.

A carboxylic acid-based polymer prepared from an α-unsaturated carboxylic acid containing a quinone compound as a raw material, for instance, an acrylic acid-based polymer, is a compound that has been widely used for detergent compositions. However, in the preparation step for a detergent composition, when an alkaline preparation solution containing an acrylic acid-based polymer obtained by polymerization using a redox initiator, and an inorganic salt such as sodium carbonate, sodium sulfite, sodium sulfate, zeolite or sodium chloride is heated and dried, the dried product may be subjected to coloration of pink or red. The coloration has become the causation for devaluing a detergent composition or the like as a manufactured article.

However, the development of a means of preventing coloration has been earnestly desired since the causation for coloration has not yet been elucidated.

It is thought that the causation for coloration of a carboxylic acid-based polymer, for instance, an acrylic acid-based polymer during storage, is based on the fact that the acrylic acid-based polymer formed by polymerization is oxidized to form a complex with a metal ion composed of iron or the like.

Therefore, in order to suppress coloration in the preparation of the acrylic acid-based polymer, there have been proposed a process comprising using hydrogen peroxide and a persulfate together in a specified ratio in a redox polymerization process for acrylic acid (Japanese Patent Laid-Open No. Hei 3-9905), and a process for preparing an acrylic acid-based polymer comprising irradiating with ultraviolet rays using an azo initiator in the presence of hydrogensulfite ion (Japanese Patent Laid-Open Nos. Hei 1-38403 and Hei 1-67305).

These processes are intended to improve coloration immediately after the preparation. However, the aqueous solution of an acrylic acid-based polymer obtained is gradually colored during storage, especially during storage at a temperature of at least room temperature. Also, even if coloration of the acrylic acid-based polymer immediately after the preparation is suppressed, the polymer may be colored when pH is increased, thereby degrading its quality.

In addition, the acrylic acid-based polymer, which is a carboxylic acid-based polymer, has been used for an inorganic pigment dispersant, a scale inhibitor, a builder for a detergent or the like. However, there is also a problem of coloration in the acrylic acid-based polymer immediately after preparation or during storage as described above. Especially, in a case where a detergent is prepared or a detergent is used, its coloration becomes remarkably noticeable since the system is strongly alkali, thereby drastically lowering the quality of a detergent. For instance, there has been disclosed in Japanese Patent Laid-Open No. Hei 11-315115 that an acrylic acid-based polymer is used as a builder in a detergent. However, there are no disclosures concerning coloration during the storage of the acrylic acid-based polymer.

DISCLOSURE OF INVENTION

An object of the present invention is to provide a process for preparing a carboxylic acid-based polymer (hereinafter referred to as "polymer") with a hydrogensulfite and oxygen as redox initiators, wherein the process is capable of stably preparing a high-quality polymer containing a reduced amount of impurities with excellent productivity while suppressing coloration even if the amount of gas containing oxygen used is remarkably reduced in the initiation of the polymerization reaction.

The term "impurities" as used herein means an addition reaction product (hereinafter referred to as "adduct") of a hydrogensulfite, which is an initiator, and an $\alpha$-unsaturated carboxylic acid or a salt thereof.

Another object of the present invention is to provide a process for preparing a carboxylic acid-based polymer hardly causing coloration in a step for preparing a detergent composition, even in a case where an alkaline preparation solution containing a carboxylic acid-based polymer obtained by polymerizing monomers containing an unsaturated carboxylic acid or a salt thereof containing a quinone compound as a polymerization inhibitor using a redox initiator, and an inorganic salt such as sodium carbonate, sodium sulfite, sodium sulfate, zeolite or sodium chloride is heated and dried.

An even another object of the present invention is to provide a process for preparing a carboxylic acid-based polymer which is hardly colored during storage.

The present invention relates to:

a process for preparing a carboxylic acid-based polymer comprising the steps of:

(A) a first polymerization reaction step comprising introducing an aqueous solution of monomers containing an $\alpha$-unsaturated carboxylic acid or a salt thereof, an aqueous solution containing a hydrogensulfite, and a gas containing oxygen into a flow mixer to polymerize the monomers; and

(B) a second polymerization reaction step comprising further polymerizing a reaction product containing the unreacted monomer obtained in the first polymerization reaction step.

The present invention also relates to a process for preparing a carboxylic acid-based polymer comprising polymerizing monomers containing an $\alpha$-unsaturated carboxylic acid or a salt thereof containing a quinone compound as a polymerization inhibitor, and thereafter reducing the content of the quinone compound contained in the carboxylic acid-based polymer obtained using a redox initiator until the content of the quinone compound contained in the carboxylic acid-based polymer obtained becomes at most 20 mg per 1 kg of the $\alpha$-unsaturated carboxylic acid constituting the carboxylic acid-based polymer.

The present invention furthermore relates to a process for preparing a carboxylic acid-based polymer comprising (i) polymerizing an $\alpha$-unsaturated carboxylic acid or a salt thereof, or (ii) copolymerizing an $\alpha$-unsaturated carboxylic acid or a salt thereof with a monomer having an unsaturated group copolymerizable with the $\alpha$-unsaturated carboxylic acid or the salt thereof when preparing a carboxylic acid-based polymer, and adding at least 0.25 parts by weight of a reducing agent to the reaction system based on 100 parts by weight of the carboxylic acid-based polymer obtained.

BRIEF DESCRIPTION OF THE DRAWINGS

Figure 1 is a schematic explanatory view showing one embodiment of a reaction portion provided with a flow mixer used in a second polymerization reaction in the present invention.
Figure 2 is a schematic explanatory view showing one embodiment of a reaction portion provided with an agitated tank reactor used in a second polymerization reaction step in the present invention.
Figure 3 is a schematic explanatory view showing one embodiment of a reaction portion provided with a loop reactor used in a second polymerization reaction step in the present invention.

Figure 4 is a schematic explanatory view of an experimental apparatus used in Examples 1 to 2 in the present invention.

Figure 5 is a schematic explanatory view of an experimental apparatus used in Example 3 in the present invention.

Figure 6 is a schematic explanatory view of an experimental apparatus used in Example 4 in the present invention.

Figure 7 is a schematic explanatory view of an experimental apparatus used in Comparative Examples 1 to 2.

Figure 8 is a schematic explanatory view of an experimental apparatus used in Comparative Example 3.

Figure 9 is a schematic explanatory view of an experimental apparatus used in Comparative Example 4.

## BEST MODE FOR CARRYING OUT THE INVENTION

In the polymerization reaction of an $\alpha$-unsaturated carboxylic acid or a salt thereof, an aqueous solution containing a hydrogensulfite, a gas containing oxygen, and an aqueous solution of monomers (hereinafter referred to as "raw materials for the reaction") using the hydrogensulfite and oxygen as redox initiators are introduced into a flow mixer. By introducing the raw materials for the reaction into the flow mixer, fine bubbles are dispersed in the aqueous solution, and absorption efficiency of oxygen to a liquid phase is enhanced, so that the reaction can be carried out in a high initiator efficiency.

Furthermore, a desired polymer finally having a high polymerization ratio and containing a reduced amount of an adduct can be productively prepared by introducing a reaction product obtained in the above-mentioned reaction step (hereinafter referred to as "first polymerization reaction step") into a reaction step having at least a gas-liquid mixing mechanism and a temperature-controlling mechanism (hereinafter referred to as "second polymerization reaction step").

In addition, in the present invention, the hydrogensulfite and oxygen are used as gas-liquid system redox initiators. Since gas is large in volume and high in flow rate in a mixer, clogging can be prevented in the mixer without using a static mixer in continuous mixing and continuous polymerization.

In the first polymerization reaction step, the raw materials for the reaction are introduced into a flow mixer to polymerize monomers.

The $\alpha$-unsaturated carboxylic acid or a salt thereof is used as a raw material monomer. Among the $\alpha$-unsaturated carboxylic acids or salts thereof, monomers containing acrylic acid or a salt thereof as an essential component is preferable because the monomer is suitable for homopolymerization or copolymerization. Acrylic acid can be used as acrylic acid anhydride or an aqueous acrylic acid solution containing acrylic acid in a content of at least 60% by weight. This aqueous acrylic acid solution may be an aqueous solution of an alkali metal acrylate that is partly or fully neutralized, for instance, an aqueous solution of sodium acrylate, an aqueous solution of potassium acrylate or the like.

The raw material monomer may contain a hydrophilic monomer copolymerizable with the $\alpha$-unsaturated carboxylic acid or a salt thereof, for instance, maleic acid, acrylamide, 2-hydroxyethyl acrylate, 2-hydroxyethyl methacrylate or the like. The content of the hydrophilic monomer in the raw material monomer is preferably 0 to 30% by mol from the viewpoints of increasing the polymerization reaction rate and facilitating the control of the molecular weight.

When the monomer especially having a relatively low reaction rate, such as maleic acid, is subjected to copolymerization, it is preferable to use a peroxide as an auxiliary catalyst together with a hydrogensulfite and oxygen as redox initiators, from the viewpoints of increasing the reaction rate of the hydrophilic monomer, improving polymerization ratio and obtaining a polymer having a high purity. The reason why such an excellent effect is exhibited is inferred based on the fact that when the peroxide is used as an auxiliary catalyst together with the hydrogensulfite and oxygen as the redox initiators, the reaction rate of a redox reaction is increased by the peroxide having a high oxidizing action, thereby remarkably making the formation of free radicals faster, which results in enhancement of a reaction rate.

The peroxide includes, for instance, hydrogen peroxide, sodium persulfate, ammonium persulfate, potassium persulfate, t-butyl hydroperoxide, succinic acid peroxide and the like. Among them, ammonium persulfate is preferable because ammonium persulfate has a high reactivity and high solubility in water.

The amount of the peroxide is preferably 0.1 to 1.0 mol per 1 mol of the hydrogensulfite, from the viewpoints of facilitating the control of the molecular weight of the obtained carboxylic acid-based polymer to a molecular weight suitable for its application, and increasing the polymerization ratio of the hydrophilic monomer.

In the first polymerization reaction step, the peroxide can be introduced into a feeding inlet for monomers leading to a flow mixer. Also, in the second polymerization reaction step, an introduction site and an introduction method of the peroxide are not limited to specified ones.

The concentration of the monomers in the aqueous solution of the monomers (hereinafter referred to as "aqueous monomer solution") is preferably 10 to 60% by weight, more preferably 20 to 50% by weight from the viewpoint of increasing productivity and from the viewpoint of facilitating the reaction and temperature-control.

The pH of the aqueous monomer solution is preferably 5 to 9 from the viewpoint of reactivity, more preferably 6 to 7 from the viewpoint of performing the initial reaction at a high initiator efficiency.

The temperature of the aqueous monomer solution is preferably at least 5°C from the viewpoint of handling as the aqueous solution, preferably at most 30°C from the viewpoint of suppressing the polymerization of the monomers before the beginning of the reaction. From these viewpoints, the temperature of the aqueous monomer solution is preferably 5° to 30°C. When the monomers are copolymerized with maleic acid, and a salt of maleic acid is used as an aqueous solution, it is preferable that the temperature of the aqueous solution of the salt of maleic acid is 50° to 90°C.

The hydrogensulfite includes, for instance, sodium hydrogensulfite, potassium hydrogen sulfate, magnesium hydrogensulfite and the like. Among them, sodium hydrogensulfite having a strong reducing function is preferable.

The concentration of the aqueous solution containing the hydrogensulfite (hereinafter referred to as "aqueous hydrogensulfite") is preferably 1 to 40% by weight, more preferably 20 to 40% by weight from the viewpoint of productivity.

The amount of the hydrogensulfite is preferably 0.008 to 0.1 mol per 1 mol of the monomers from the viewpoints of facilitating the control of the molecular weight to be suitable for its application and suppressing the formation of an adduct.

As the gas containing oxygen (hereinafter referred to simply as "gas"), the air is generally used, and may be pure oxygen or a gas prepared by diluting pure oxygen with an inert gas. The oxygen concentration in the gas is preferably at least 10% by volume, more preferably at least 20% by volume, from the viewpoint of reactivity with the hydrogensulfite. The device for feeding a gas includes a compressor, a blower equipment and the like. It is preferable that the gas is fed at a constant rate under a constant pressure from the viewpoint of stabilizing the reaction.

The flow mixer is used for gas-liquid mixing. The flow mixer used in the present invention includes, for instance, static mixing machines such as a static mixer and an orifice mixer; a jet nozzle such as an ejector; and pipeline agitating machines such as a line mixer and the like. Among them, the static mixing machines are preferable from the viewpoints of being capable of exhibiting high mixing performance even in a small amount of gas, and from the viewpoint of durability and maintenance of the facilities and the like.

The process for introducing the raw materials for the reaction into a flow mixer includes a process comprising introducing an aqueous hydrogensulfite and a gas into a pipe for leading an aqueous monomer solution to the flow mixer, a process comprising directly introducing the raw materials for the reaction separately into a flow mixer and the like. Among these processes, the former process is preferable since a liquid and a gas can be pre-mixed with each other, and thereby the dispersibility of the gas-liquid system is enhanced.

When at least two kinds of monomers are used, each of the aqueous solutions of the monomers can be introduced into a flow mixer individually or in a mixture.

The gas-liquid mixing state in the flow mixer is an important factor for determining the reactivity of the first polymerization reaction. In order to stably generate free radicals, it is necessary to increase the contact efficiency in the gas-liquid system and to generate the state of a dispersion flow in which fine bubbles are dispersed in the liquid. From the above viewpoints, at the end point of the first polymerization reaction step, the viscosity of the reaction product is preferably at most 700 mPa•s, more preferably at most 400 mPa•s at 20°C. Within the viscosity range described above, the absorption efficiency of the gas to the liquid phase increases, so that the molecular weight can be controlled with a small amount of the initiator, and the formation of the adduct can be also suppressed.

When a static mixer is used, the flow rate of a mixed solution of monomers and an aqueous hydrogensulfite and the flow rate of gas in the interior of the mixer are preferably at least 0.5 m/s and at least 1.0 m/s, respectively, more preferably at least 1.0 m/s and at least 3.0 m/s, respectively, from the viewpoint of forming the state of dispersion flow within the range which would not make the flow state unstable as in the pulsating state. The flow rate can be regulated, for instance, by adjusting the minimum cross-sectional area at the place through which a fluid passes in the mixer.

In a case where a jet nozzle is used, the flow rate of a mixed solution of monomers and an aqueous hydrogensulfite and the flow rate of a gas in the interior of the jet nozzle are preferably at least 1.0 m/s and at least 5.0 m/s, respectively, more preferably at least 3.0 m/s and at least 10 m/s, respectively, from the viewpoint of forming the state of dispersion flow. The flow rate can be regulated, for instance, by adjusting the minimum cross-sectional area at the place through which a fluid passes in the jet nozzle.

In a case where a pipeline agitating machine is used, it is preferable that the number of rotations and driving force of an agitation blade are adjusted so that the diameter of the bubbles is at most 1000 $\mu$m.

The ratio of the volume of the gas introduced into a flow mixer in the standard state (at 273K under 101.3 kPa) to the total volume of the aqueous monomer solution and the aqueous hydrogensulfite (a value obtained by dividing the volume of the gas with the volume of the liquids; hereinafter referred to as "liquid-gas ratio") differs depending on the kind of the flow mixer. The liquid-gas ratio is usually preferably at least 1, more preferably at least 4, from the viewpoints of generating the state of a dispersion flow, increasing the solubility of the gas in the aqueous solutions of the monomer and the hydrogensulfite, and carrying out the polymerization reaction in a high initiator efficiency. In addition, the liquid-gas ratio is preferably at most 300, more preferably at most 200 from the viewpoints of reducing the pressure drop in the mixing portion, and stabilizing the flow state to make even the molecular weight of an obtained polymer. From these viewpoints, the liquid-gas ratio is preferably 1 to 300, more preferably 4 to 200.

The residence time of the raw materials for the reaction in the flow mixer is preferably at least 0.05 seconds, more preferably at least 0.1 seconds from the viewpoint of performing the initial reaction in a high initiation efficiency.

Also, the residence time is preferably at most 30 seconds, more preferably at most 10 seconds from the viewpoints of suppressing the increase in the temperature due to the reaction heat and pressure drop in the mixer even in the case of a very fast redox initiation reaction. From these viewpoints, the residence time is preferably within a range from 0.05 to 30 seconds, more preferably within a range from 0.1 to 10 seconds.

The reaction temperature in the first polymerization reaction step is preferably at most 80°C, more preferably at most 60°C from the viewpoints of suppressing the branching of a molecular chain of a polymer, deteriorating the hue of a polymer, and suppressing the formation of an adduct, and the reaction temperature is preferably at least 5°C from the viewpoint of handling of the obtained reaction product as an aqueous solution of the polymer. From these viewpoints, the reaction temperature is preferably 5° to 80°C, more preferably 5° to 60°C.

The method for controlling the reaction temperature includes, for instance, a method comprising selecting conditions for the initial reaction of the polymerization in a flow mixer, thereby controlling the polymerization rate; a method of removing reaction heat with a cooling device or the like; and the like.

The polymerization ratio in the first polymerization reaction step is preferably at least 30%, more preferably at least 35% from the viewpoints of carrying out the initial reaction in a high initiation efficiency, and reducing the amount of an adduct formed. The polymerization ratio is preferably at most 90%, more preferably at most 80% from the viewpoint of reducing apparatus cost and amount of the gas used, thereby obtaining a polymer having a constant quality. From these viewpoints, the polymerization ratio is preferably 30 to 90%, more preferably 35 to 80%.

The reaction product being passed through the flow mixer and initiating a polymerization reaction may usually be introduced into the second polymerization reaction step with a pipe. Before the introduction into the second polymerization reaction step, the reaction product may also be passed through a heat exchanger, a reservoir, a gas-liquid separator and the like.

The polymerization of the reaction product containing an unreacted monomer thus obtained in the first polymerization reaction step (hereinafter referred to as a "first polymerization reaction product") is further carried out in the second polymerization reaction step.

The second polymerization reaction step has at least (1) a gas-liquid mixing mechanism and (2) a temperature-controlling mechanism, and may have (3) a gas feeding mechanism, (4) a gas-liquid separation mechanism and (5) a circulation mechanism as occasion demands. Each of these mechanisms is not limited to specified ones as long as the mechanisms are those usually employed in the reaction portion for increasing a polymerization ratio.

The gas-liquid mixing mechanism (1) includes the same flow mixer as those used in the first polymerization reaction step; an agitated tank for performing gas-liquid mixing using an impeller, a nozzle jet stream, an aeration procedure or the like; a bubble tower for contact and mixing a gas and a liquid; and the like. In addition, the mixing mechanism may be a gas-liquid reactor capable of performing a gas-liquid mixing procedure.

The temperature-controlling mechanism (2) is not limited to specified ones as long as heat exchange is carried out. The temperature-controlling mechanism (2) includes a double pipe heat exchanger, a multiple pipe heat exchanger, a spiral heat exchanger and the like as general heat exchangers. The temperature-control may also be carried out utilizing a jacket, a coil or the like attached to an agitated tank.

The gas feed mechanism (3), which is used as occasion demands, may be the same as those used in the first polymerization reaction step. It is preferable that the reaction is started by the first polymerization reaction and a gas is additionally fed for increasing the polymerization ratio within a range that the pressure drop is permitted in the facility in order to supplement the lowering of a gas absorption rate due to the increase in viscosity of the system.

The gas-liquid separation mechanism (4) is not limited to specified ones, and the gas-liquid separation mechanism includes a cyclone, a falling film gas-liquid separation tower, a gas separation tank having a gas exhaust valve and the like. When the gas separation tank is used, it is preferable that the gas separation tank is provided with an agitator in order to carry out cooling or avoid the local increase of a monomer concentration. The gas release portion of the gas-liquid separation mechanism may be provided with a heat exchanger in order to condensate water vapor contained in the gas as occasion demands.

As to the circulation mechanism (5), the circulation system can be formed with a pipe or other equipment, and a single and plural circulation system may be formed.

The preferable reaction portion usable in the second polymerization reaction step includes a reaction portion provided with a flow mixer equipped with the above-mentioned mechanisms (1) to (3), a reaction portion provided with an agitated tank-type reactor equipped with the above-mentioned mechanisms (1) to (4), a reaction portion provided with a loop reactor equipped with the above-mentioned mechanisms (1) to (5), and the like. These reaction portions can also be combinably used in a plural number.

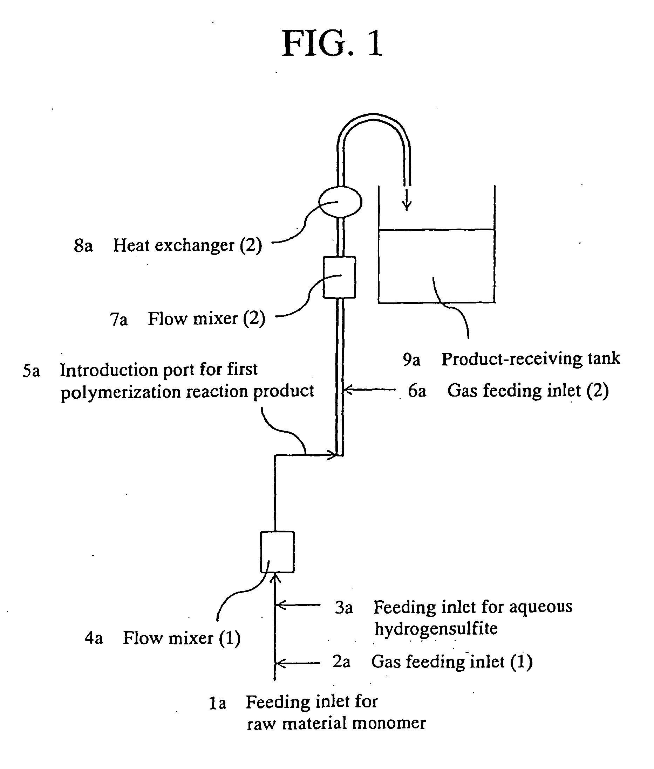

One embodiment where a reaction portion provided with a flow mixer is used in the second polymerization reaction step will be described on the basis of Figure 1.

In Figure 1, an aqueous monomer solution is fed from a feeding inlet 1a for a raw material monomer, a gas from a gas feeding inlet (1) 2a, and an aqueous hydrogensulfite from a feeding inlet 3a for an aqueous hydrogensulfite.

Each of the fed components is introduced into a flow mixer (1) 4a and guided from an introduction port 5a for a first polymerization reaction product into a reaction portion provided with a flow mixer (2) 7a used as the second polymerization reaction step. The air is supplemented from a gas feeding inlet (2) 6a, and the product is transferred to a product-receiving tank 9a via the flow mixer (2) 7a and a heat exchanger (2) 8a.

First, the raw materials for the reaction are introduced into the flow mixer (1) 4a to start the first polymerization reaction.

Next, the first polymerization reaction product is introduced into the second polymerization reaction step. The second polymerization reaction is continuously carried out while further feeding the gas from the gas feeding inlet (2) 6a and increasing the miscibility of gas and liquid in the flow mixer (2) 7a, and heat generated in polymerization is removed with the heat exchanger (2) 8a.

One or more flow mixer(s) (2) 7a used in the second polymerization reaction step may be arranged from the viewpoint of increasing the polymerization ratio. In this case, it is preferable that the gas is supplemented at the position before each of the mixers, thereby accelerating the reaction. From the viewpoint of reducing a pressure drop, there may be provided flow mixers each having sequentially lower pressure drops along with the progress in the reaction.

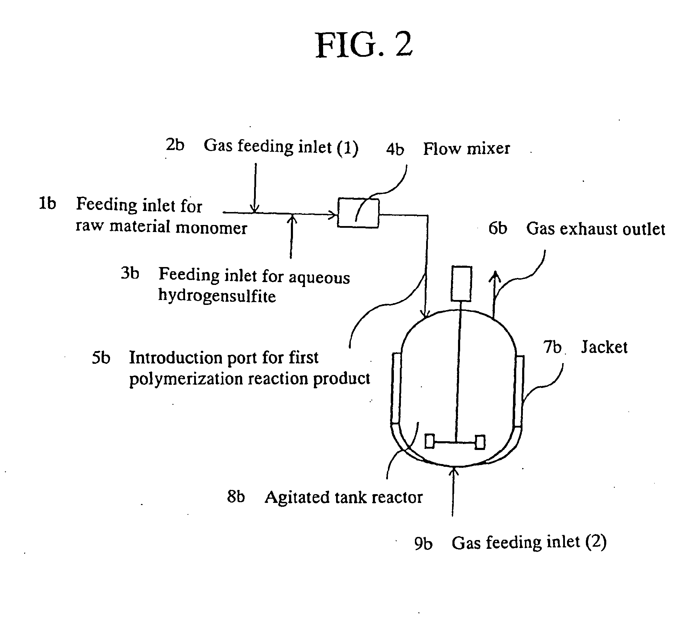

Next, one embodiment where a reaction portion provided with an agitated tank reactor is used in the second polymerization reaction step will be described on the basis of Figure 2.

In Figure 2, an aqueous monomer solution is fed from a feeding inlet 1b for a raw material monomer, a gas from a gas feeding inlet (1) 2b, and an aqueous hydrogensulfite from a feeding inlet 3b for an aqueous hydrogensulfite. Each of the fed components is introduced into a flow mixer 4b, and introduced from an introduction port 5b for a first polymerization reaction step into a reaction portion provided with an agitated tank reactor 8b used in the second polymerization reaction step. A gas feeding inlet (2) 9b is provided in the agitated tank reactor 8b.

First, the raw material for the reaction is introduced into the flow mixer 4b to start the first polymerization reaction.

Next, the first polymerization reaction product is introduced into the second polymerization reaction step. The second polymerization reaction is carried out while carrying out the degassing from a gas exhaust outlet 6b and cooling the reaction product with the agitated tank reactor 8b equipped with a jacket 7b. A gas for accelerating the reaction is fed from the gas feeding inlet (2) 9b to increase the polymerization ratio while carrying out the aeration and agitation procedures.

In this case, it is preferable that the gas fed from the gas feeding inlet (2) 9b is made finer so that the bubble diameter is at most 1000 $\mu$m by means of, for instance, a sintered glass, a porous plate or the like in order to enhance the contact efficiency between the gas and the liquid.

There is an advantage in carrying out the first polymerization reaction prior to the second polymerization reaction that the control of molecular weight, which is a defect of a conventionally proposed agitated tank reactor of a dropping method, can be considerably improved as compared to the agitated tank reactor.

In a conventional reaction, monomers, an initiator and the like are added dropwise directly to an agitated tank reactor. When the monomer concentration is increased in order to improve productivity, there arises a problem that high-molecular weight substances are produced, rendering in a broader molecular weight distribution. Therefore, there arises a problem that the amount of an adduct derived from the initiator is increased when the amount of the initiator is increased in order to lower the molecular weight.

On the other hand, according to the present invention, since the first polymerization reaction is carried out prior to the second polymerization reaction, a reaction product which has already started the reaction can be introduced into an agitated tank reactor, whereby the reaction can be carried out in the state of a substantially low monomer concentration.

As a result, the monomer concentration in the agitated tank can be kept low, and a polymer having a low molecular weight and a narrow molecular weight distribution can be prepared productively.

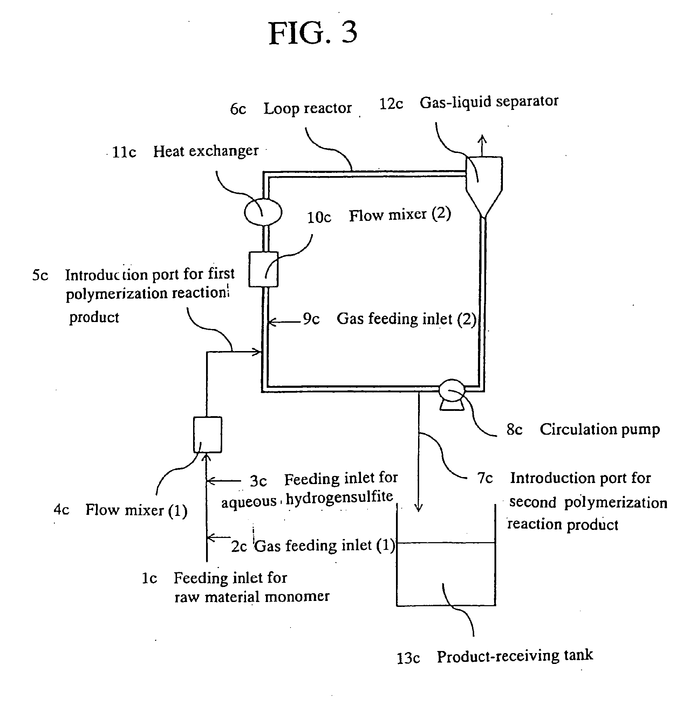

One embodiment where a reaction portion provided with a loop reactor is used in the second polymerization reaction step according to the present invention will be described on the basis of Figure 3.

In Figure 3, an aqueous monomer solution is fed from a feeding inlet 1c for a raw material monomer, a gas from a gas feeding inlet (1) 2c, and an aqueous hydrogensulfite from a feeding inlet 3c for an aqueous hydrogensulfite. Each of the components is introduced into a flow mixer (1) 4c, leading to a reaction portion provided with a loop reactor 6c used as the second polymerization reaction step from an introduction port 5c for a first polymerization reaction product.

The loop reactor 6c is provided with a discharge outlet 7c for a reaction product obtained in the second polymerization reaction (hereinafter referred to as "second polymerization reaction product"), a circulation pump 8c, a gas feeding inlet (2) 9c, a flow mixer (2) 10c, a heat exchanger 11c and a gas-liquid separator 12c.

First, the raw materials for the reaction are introduced into the flow mixer (1) 4c to start the first polymerization reaction.

Next, the first polymerization reaction product is introduced into the second polymerization reaction step, and the second polymerization reaction is carried out by feeding a gas for accelerating the reaction from the gas feeding inlet (2) 9c, and further performing the gas-liquid mixing in the flow mixer (2) 10c during the circulation procedure.

The circulating second polymerization reaction product is subjected to the removal of the reaction heat in the heat exchanger 11c provided in the loop reactor 6c, separation of the gas in the gas-liquid separator 12c, and recirculation with the circulation pump 8a. The polymerization can be continuously carried out by discharging the second polymerization reaction product in the same amount as the first polymerization reaction product which is introduced into the loop reactor 6c from the discharge outlet 7c for the second polymerization reaction product provided in a part of the loop reactor 6c to a product-receiving tank 13c.

In the second polymerization reaction step, the method for increasing the polymerization ratio includes a method of enhancing mixing performance in the flow mixer (2) 10c, a method of increasing the feed amount from the gas feeding inlet (2) 9c and the like. However, it is effective in the circulation procedure that the number of passages in the mixing portion per average residence time of the second polymerization reaction product in the loop reactor 6c is increased. The number of passages per average residence time is preferably at least 5 passages, and more preferably at least 10 passages.

It is advantageous that the first polymerization reaction is carried out prior to the second polymerization reaction because the low productivity which is a defect of a conventionally proposed loop reactor can be considerably improved as compared to the loop reactor.

In a conventional reaction, monomers, an initiator and the like are directly introduced into a loop reactor. Therefore, there arises a problem that the control of the molecular weight becomes more difficult, and that the amount of unreacted monomers becomes larger when the amount of the monomers, the initiator and the like are increased or their concentrations are increased in order to increase the productivity. Also, when both productivity and quality are to be satisfied, there arises a problem that the average residence time has to be extended, thereby making the facilities in a large scale.

On the other hand, in the present invention, since the first polymerization reaction is carried out prior to the second polymerization reaction, a reaction product which has already started the reaction can be introduced into the loop reactor, whereby the reaction can be carried out in the state of a substantially low monomer concentration. Therefore, since the ratio of an introduction amount of the first polymerization reaction product to a circulation flow rate can be increased, not only productivity and quality can be satisfied but also the construction of a process with a high apparatus efficiency can also be realized since the scale of the facilities can be further miniaturized. Also, since the average residence time in the loop reactor can be shortened, the operation can also be realized at low pressure drop.

The amount of the first polymerization reaction product introduced into the loop reactor according to the present invention is preferably at least 3.3% by weight of the circulation flow rate from the viewpoints of productivity, and preferably at most 50% by weight of the circulation flow rate from the viewpoints of control of molecular weight and increase in polymerization ratio. From these viewpoints, the amount introduced is preferably 3.3 to 50% by weight of the circulation flow rate. The average residence time in the loop reactor is preferably at least 1 minute from the viewpoint of a higher polymerization ratio, and preferably at most 120 minutes from the viewpoints of productivity and miniaturization of the facility. From these viewpoints, the average residence time is 1 to 120 minutes.

The reaction temperature in the second polymerization reaction step is preferably 5° to 80°C, more preferably 5° to 60°C from the viewpoints of improvement in reactivity and quality, and facilitation of handling as an aqueous solution of the polymer as well as the first polymerization reaction step. The reaction temperature can be easily adjusted by a temperature-controlling mechanism.

It is preferable that the reaction is continued until the polymerization ratio in the second polymerization reaction step attains at least 95% from the viewpoint of improving quality, and it is more preferable that a maturing procedure is carried out for reducing the unreacted monomer in a product-receiving tank or the like from the viewpoint of even more increasing the polymerization ratio.

The content of the unreacted monomer in an aqueous solution of the polymer is preferably at most 1.0% by weight, more preferably at most 0.5% by weight in a 40% by weight aqueous solution of the polymer from the viewpoint of increasing quality and yield.

The content of the adduct is preferably at most 2.0% by weight, more preferably at most 1.0% by weight in a 40% by weight aqueous solution of the polymer from the viewpoint of increasing quality and yield.

It is preferable that the weight-average molecular weight of the polymer is usually 1000 to 100000 from the viewpoint of increasing dispersibility and adsorbability. In a case where the polymer is used as a builder for a detergent, a dispersant, a scale inhibitor or the like, the weight-average molecular weight thereof is preferably 2000 to 30000. The value obtained by dividing a weight-average molecular weight with the number-average molecular weight (hereinafter referred to as "dispersion index") is preferably at most 7, more preferably at most 5.

The solid content in the aqueous solution of the polymer is preferably at least 20% by weight from the viewpoint of improving productivity.

The polymer can also be subjected to an after treatment such as a solid content adjustment, a pH adjustment, a deodorization treatment, a decoloration treatment or the like.

A representative example of the carboxylic acid-based polymer includes an acrylic acid-based polymer. As a raw material monomer for the acrylic acid-based polymer, acrylic acid is used.

Acrylic acid is a chemically unstable compound because acrylic acid has a very high reactivity. Therefore, acrylic acid may be polymerized, for instance, just with an external shock acted thereon during its transportation. For its reason, acrylic acid generally sold on the market contains a polymerization inhibitor represented by a quinone compound in order to prevent their polymerization. The content of the quinone compound contained in acrylic acid as a polymerization inhibitor is generally 200 mg or so per 1 kg of acrylic acid.

In a case where acrylic acid is polymerized using a redox initiator that has been generally used as a low-temperature polymerization initiator, the quinone compound remains in an amount of about 160 to about 180 mg per 1 kg of acrylic acid constituting the acrylic acid-based polymer, which differs depending upon the conditions for polymerization.

Therefore, the present inventors have remarked on acrylic acid containing a quinone compound and adjusted the content of the quinone compound in a polymer of which the essential monomer component is acrylic acid to at most 20 mg per 1 kg of acrylic acid constituting the polymer. As a result, it has been found out that the phenomenon of coloration is eliminated even in a case where the polymer is used as a raw material of a detergent composition, and is heated in its preparation step. The present invention has been accomplished based on the above findings.

The phrase "acrylic acid constituting the acrylic acid-based polymer" as used herein refers to acrylic acid used as a monomer component for the acrylic acid-based polymer. In a case where a repeating unit based on the salt of acrylic acid exists in the acrylic acid-based polymer, the repeating unit of the salt of acrylic acid is regarded as a repeating unit of acrylic acid.

When a carboxylic acid-based polymer is used in place of the acrylic acid-based polymer, or an α-unsaturated carboxylic acid or a salt thereof is used in place of acrylic acid, both compounds are handled in the same way, respectively.

The quinone compound contained in acrylic acid as a polymerization inhibitor includes p-methoxyphenol (hereinafter referred to as methoquinone), hyroquinone, benzoquinone, tert-butylcatechol and the like.

The acrylic acid-based polymer can be prepared by polymerizing monomers containing acrylic acid or a salt thereof.

Next, the content of the quinone compound contained in the resultant acrylic acid-based polymer is reduced until the content becomes at most 20 mg per 1 kg of acrylic acid constituting the polymer.

Specific methods for reducing the content of the quinone compound include, for instance:

(1) a method of reducing the content of the quinone compound, comprising mixing an aqueous solution of the acrylic acid-based polymer with an oxidizing agent (hereinafter referred to as the oxidation method), and

(2) a method of reducing the content of the quinone compound, comprising contacting an aqueous solution of the acrylic acid-based polymer with an adsorbent (hereinafter referred to as the adsorption method) and the like. The oxidation method and the adsorption method can be used in combination. For instance, the content of the quinone compound is reduced from the aqueous solution of the acrylic acid-based polymer by the adsorption method, and thereafter subjected to the oxidation method, or the content of the quinone compound is reduced from the aqueous solution of the acrylic acid-based polymer by the oxidation method, and thereafter subjected to the adsorption method.

First, a case where the oxidation method is employed will be explained. The oxidizing agent includes, for instance, hydrogen peroxide, sodium persulfate, sodium hypochlorite and the like. These may be used alone or in admixture of at least two kinds. Among these oxidizing agents, hydrogen peroxide is preferable from the viewpoint of being capable of efficiently degrading the quinone compound.

The amount of the oxidizing agent cannot be absolutely determined because the amount differs depending upon the kind or the like. It is preferable that the amount is usually 100 to 20000 mg per 1 kg of acrylic acid constituting the acrylic acid-based polymer. For instance, in a case where hydrogen peroxide is used as an oxidizing agent, the amount of hydrogen peroxide is preferably 350 to 15000 mg, more preferably 1000 to 9000 mg per 1 kg of acrylic acid constituting the acrylic acid-based polymer, in order to efficiently decompose the quinone compound, suppress the generation of excessive bubbles due to decomposition of hydrogen peroxide, and not to give worsening influence to the acrylic acid-based polymer.

In a case where hydrogen peroxide is added to the aqueous solution of the acrylic acid-based polymer, it is desired that the pH of the aqueous solution is adjusted to 8.0 to 13.9, preferably 11.0 to 13.5 before addition of hydrogen peroxide in order to accelerate the decomposition of the quinone compound. The pH can be easily adjusted with, for instance, a pH adjustment agent such as sodium hydroxide.

The temperature at which the oxidizing agent is added to the aqueous solution of the acrylic acid-based polymer is preferably 10° to 50°C in order to accelerate the decomposition of the quinone compound.

After the oxidizing agent is added to the aqueous solution of the acrylic acid-based polymer, it is preferable that the mixture is agitated in order to enhance the miscibility of the oxidizing agent and the quinone compound contained in the aqueous solution of the acrylic acid-based polymer.

The time period required for reducing the content of the quinone compound per 1 kg of acrylic acid constituting the acrylic acid-based polymer to at most 20 mg, which is a desired amount as explained below, cannot be absolutely determined since the time period differs depending upon various conditions such as the kind and amount of the oxidizing agent, and the content of the quinone compound in the aqueous solution of the acrylic acid-based polymer. The time period is usually about 1 minute to about 24 hours.

The mixing of the aqueous solution of the acrylic acid-based polymer with the oxidizing agent can be carried out by a process such as a batch process, a semi-batch process or a continuous process. When the oxidizing agent remains after the treatment with the oxidizing agent, a reducing treatment using a reducing agent may be carried out.

Next, a case where the adsorption method is employed will be explained. The adsorbent includes, for instance, active charcoal, zeolite, activated clay and the like, which may be used alone or in admixture of at least two kinds. Among the adsorbents, active charcoal is preferable from the viewpoint of increasing the removal efficiency of the quinone compound.

The amount of the adsorbent cannot be absolutely determined since the amount differs depending upon its kind. It is preferable that the amount is usually 100 to 1000 g per 1 kg of acrylic acid constituting the acrylic acid-based polymer. When active charcoal is, for instance, used as an adsorbent, it is preferable that the amount of active charcoal is 100 to 650 g per 1 kg of acrylic acid constituting the acrylic acid-based polymer from the viewpoints of efficiently adsorbing the quinone compound, increasing productivity and reducing the amount of active charcoal used.

When the aqueous solution of the acrylic acid-based polymer is contacted with the adsorbent, it is desired that the pH of the aqueous solution of the acrylic acid-based polymer is adjusted to 5 to 9, preferably 6 to 8 before its contact with the adsorbent in order to increase the adsorption efficiency of the quinone compound. The pH can be easily adjusted with, for instance, a pH adjustment agent such as sodium hydroxide.

When the aqueous solution of the acrylic acid-based polymer is contacted with the adsorbent, the temperature of the aqueous solution of the acrylic acid-based polymer is 10° to 70°C, preferably 30° to 50°C in order to increase the adsorption efficiency of the quinone compound, and avoid the thermal deterioration of the acrylic acid-based polymer itself.

When the aqueous solution of the acrylic acid-based polymer is contacted with the adsorbent, it is preferable that agitation is carried out in order to increase the contact efficiency of the adsorbent and the quinone compound contained in the aqueous solution of the acrylic acid-based polymer. In addition, there may be employed a method of allowing the aqueous solution of the acrylic acid-based polymer to pass through a vessel packed with an adsorbent, and a method of circulating the aqueous solution of the acrylic acid-based polymer. In any one of the methods, the quinone compound contained in the aqueous solution of the acrylic acid-based polymer is adsorbed to the adsorbent by contacting the adsorbent with the aqueous solution of the acrylic acid-based polymer, to reduce the quinone compound contained in the aqueous solution of the acrylic acid-based polymer.

The time period required for reducing the content of the quinone compound per 1 kg of acrylic acid constituting the acrylic acid-based polymer to at most 20 mg, which is a desired amount as explained below, cannot be absolutely determined since the time period differs depending upon various conditions such as the kind or amount of the adsorbent and the content of the quinone compound in the aqueous solution of the acrylic acid-based polymer. The time period is usually about 5 minutes to about 24 hours.

As described above, since the content of the quinone compound in the acrylic acid-based polymer is reduced, coloration of a product to be dried can be avoided even when the acrylic acid-based polymer is heated upon thermal drying in the preparation step for a detergent composition. Coloration can be prevented by adjusting the content of the quinone compound to at most 20 mg per 1 kg of acrylic acid constituting the acrylic acid-based polymer. The content is preferably at most 10 mg, more preferably at most 3.5 mg in order to further prevent the change in hue.

The acrylic acid-based polymer thus obtained is hardly colored pink or red even in a case where the polymer is heated in the preparation step for a detergent composition or the like. Therefore, the polymer is preferably used in a detergent composition or the like.

The content of the quinone compound in the acrylic acid-based polymer is determined by high-performance liquid chromatography (hereinafter referred to as "HPLC") under the following determination conditions. The content of the quinone compound as used herein is a value as determined by this method.

[Determination Conditions for Content of Quinone Compound]

Column: manufactured by Tosoh Corporation, trade name: TSK-GEL Super AW2500
Mobile phase: aqueous solution of 0.1 mol/L potassium dihydrogenphosphate and 0.1 mol/L sodium dihydrogenphosphate / acetonitrile = 70/30 (volume ratio) Detector: UV (220 nm)
Column temperature: 40°C
Flow rate: 0.6 mL/min
Sample and determination: A sample is prepared by dissolving in ion-exchanged water 2 g of the aqueous solution in the case of the 40% aqueous solution of the acrylic acid-based polymer, or 0.8 g of a solid content or 0.8 g of solid in the case of the aqueous solution other than the aqueous solution of the acrylic acid-based polymer or solid acrylic acid-based polymer so as to make up the total liquid volume of 200 mL. Twenty microliters of the sample is poured into HPLC, to be determined.

The quinone compound is determined from the determined peak area and a separately obtained calibration curve. Determination limit: 3.5 mg per 1 kg of acrylic acid constituting the acrylic acid-based polymer.

In addition, the determination conditions for determining the weight-average molecular weight of the acrylic acid-based polymer are as follows:

[Determination Conditions for Weight-Average Molecular Weight]

Determination Method: GPC (gel permeation chromatograph)
Column: manufactured by Tosoh Corporation, trade name: TSK-GEL guard PWXL
manufactured by Tosoh Corporation, trade name: TSK-GEL G4000 PWXL
manufactured by Tosoh Corporation, trade name: TSK-GEL G2500 PWXL
Mobile phase: aqueous solution of 0.1 mol/L potassium dihydrogenphosphate and 0.1 mol/L sodium dihydrogenphosphate / acetonitrile = 90/10 (volume ratio) Detector: RI
Column temperature: 40°C
Flow rate: 1.0 mL/min
Calculated standard substance: polyacrylic acid [manufactured by AMERICAN STANDARDS CORP]
Sample: A sample is prepared by dissolving in ion-exchanged water 2 g of the aqueous solution in the case of the 40% aqueous solution of the acrylic acid-based polymer, or 0.8 g of a solid content or 0.8 g of solid in the case of the aqueous solution other than the aqueous solution of the acrylic acid-based polymer or solid acrylic acid-based polymer so as to make up the total liquid amount of 200 mL. Twenty microliters of the sample is poured into HPLC, to be determined.

In order to suppress coloration when the aqueous solution of the acrylic acid-based polymer is stored, the following procedures can be carried out.

First, the aqueous solution of the acrylic acid-based polymer is neutralized with an alkalizing agent.

The alkalizing agent used for the neutralization includes alkali metal hydroxides such as sodium hydroxide and potassium hydroxide; alkaline earth metal hydroxides such as calcium hydroxide and magnesium hydroxide; ammonia; organic amines such as monoethanolamine, diethanolamine, and triethanolamine; and the like. These can be used alone or in admixture of at least two kinds.

It is preferable that the amount of the alkalizing agent is adjusted so that the pH of the aqueous solution of the acrylic acid-based polymer becomes 4 to 13. For instance, when a sulfite is used as a reducing agent, sulfur dioxide gas is liable to be generated if the pH of the aqueous solution of the acrylic acid-based polymer is less than 4.

Next, the aqueous solution of the neutralized acrylic acid-based polymer is treated with a reducing agent.

The reducing agent is added to the aqueous solution of the acrylic acid-based polymer so that the reducing agent exists in the acrylic acid-based polymer in an amount of preferably at least 0.25 parts by weight, preferably 0.25 to 10 parts by weight, more preferably 0.75 to 10 parts by weight, even more preferably 1.25 to 5 parts by weight based on 100 parts by weight of the acrylic acid-based polymer.

Among the reducing agents, the inorganic reducing agent is preferable. Examples of the inorganic reducing agent include inorganic acid salts such as a sulfite, a hydrogensulfite, a thiosulfate, phosphorous acid, a phosphite, hypophosphorous acid and a hypophosphite. The inorganic acid salt includes inorganic acid salts of alkali metals such as sodium and potassium; inorganic acid salts of alkaline earth metals such as calcium and magnesium; and ammonium salts, and salts of organic amines such as monoethanolamine and triethanolamine. These may be used alone or in admixture of at least two kinds. Among them, salts of an alkali metal such as sodium or potassium are preferable.

Among the inorganic reducing agents, at least one agent selected from the group consisting of a sulfite, a hydrogensulfite and a hypophosphite is preferable, and sodium hydrogensulfite and sodium hypophosphite are more preferable.

The temperature at which the reducing agent is added to the acrylic acid-based polymer is preferably room temperature. When the viscosity of the aqueous solution of the acrylic acid-based polymer is higher, the reducing agent can also be added to the aqueous solution at a higher liquid temperature. In this case, the liquid temperature of the aqueous solution is preferably at most 50°C.

Since the acrylic acid-based polymer thus obtained is hardly colored even when stored, the polymer can be suitably used, for instance, as a dispersant for pigments, a scale inhibitor, a builder for a detergent and the like.

EXAMPLES

Physical properties regarding the polymers obtained in the following Examples and Comparative Examples were determined by the following methods.

(1) Determinations of Amount of Unreacted Monomer and Amount of Adduct and Calculation of Polymerization Ratio

The amount of unreacted monomer and the amount of adduct were determined by high-performance liquid chromatography (hereinafter referred to as HPLC), and at the same time the concentration of a polymer in each aqueous solution of a polymer was obtained from a calibration curve between a known concentration of an unreacted monomer and an amount of an adduct.

The polymerization ratio was calculated from the amount of unreacted monomer and the amount of monomer converted to adduct before and after the reaction in accordance with the following equation:

$$[\text{Polymerization Ratio}]$$

$$= [(\text{Amount of unreacted monomer before reaction}) - (\text{Amount of unreacted}$$

$$\text{monomer after reaction}) - (\text{Amount of monomer converted to adduct})]$$

$$\div [\text{Amount of unreacted monomer before reaction}] \times 100$$

The adduct (disodium 3-sulfopropionate) used as a standard was prepared in the same manner as in Schenck, R. T. E. and Danishefski, I., *J. Org. Chem.*, **16,** 1683 (1951). The purity of the adduct used as a standard was obtained by determining the amount of the unreacted monomer by the above-mentioned HPLC, and the amount of the polymer by 1H-NMR (proton nuclear magnetic resonance method).

The determination conditions for HPLC were as follows:

Column: manufactured by Tosoh Corporation, trade name: TSK-GEL ODS-80TS
Mobile phase: aqueous solution of which pH was adjusted to 2.5 by adding phosphoric acid to 0.02 mol/L potassium dihydrogenphosphate
Detector: ultraviolet detector (wavelength: 210 mm)
Column temperature: 30°C
Flow rate: 1.0 mL/min
Sample: Ion-exchanged water was added to an aqueous solution of a polymer containing a solid content of 0.8 g so that the total liquid amount became 200 mL. Thereafter, a part of the prepared liquid was taken out from the liquid in an amount of 10 μL, and poured into the column.

(2) Determination of Molecular Weight and Calculation of Dispersion Index

Molecular weight was determined by GPC (gel permeation chromatography), and the weight-average molecular weight and the number-average molecular weight were obtained from the calculated standard substances.

In addition, dispersion index was calculated from the weight-average molecular weight and the number-average molecular weight in accordance with the following equation:

$$[\text{Dispersion Index}] = [\text{Weight-Average Molecular Weight}] \div [\text{Number-Average}$$

$$\text{Molecular Weight}]$$

The determination conditions for GPC are shown as follows:

Column: manufactured by Tosoh Corporation, trade name: TSK-GEL guard PWXL
manufactured by Tosoh Corporation, trade name: TSK-GEL G4000 PWXL
manufactured by Tosoh Corporation, trade name: TSK-GEL G2500 PWXL

Mobile phase: aqueous solution of 0.1 mol/L potassium dihydrogenphosphate and 0.1 mol/L sodium dihydrogenphosphate / acetonitrile = 90/10 (volume ratio) Detector: differential refractive index detector
Column temperature: 40°C
Flow rate: 1.0 mL/min
Calculated standard substance: polyacrylic acid [manufactured by AMERICAN STANDARD CORP]
Sample: Ion-exchanged water was added to an aqueous solution of a polymer containing a solid content of 0.8 g so that the total liquid amount was 200 mL. Thereafter, a part of this prepared liquid was taken out from the liquid in an amount of 10 μL, and poured into the column.

(3) Determination of Solid Content

The aqueous solution of the polymer was dried in a dryer at 105°C for 2 hours, and the solid content (% by weight) was calculated from before and after its weight.

(4) Determination of Hue

Hue of the aqueous solution of the polymer was compared to the APHA standardized color, the closest standard color number in the standard color alignment was defined as hue (APHA) of the aqueous solution of the polymer.

In addition, in each Example and each Comparative Example, the amounts of hydrogen peroxide and a reducing agent were quantified by the following methods.

(5) Method for Quantifying Hydrogen Peroxide

Ten milliliters of 20% sulfuric acid was added to 10 ml of 10% potassium iodide, and 5 g of an aqueous solution of the acrylic acid-based polymer before neutralization or an aqueous solution of the acrylic acid-based polymer after neutralization was accurately weighed and added to the solution, and mixed. After allowing the mixture to stand in a cool and dark place for 30 minutes, the mixture was titrated with 0.1 N sodium thiosulfate. The amount of remaining hydrogen peroxide was obtained in accordance with the equation:

$$[\text{Amount of hydrogen peroxide (\% by weight)}]$$
$$= [(\text{Amount of sodium thiosulfate titrated} - \text{Blank}) \times 0.1 \times f \times 1.7]$$
$$\div [\text{Amount of sample}]$$

wherein f is a concentration factor of 0.1 N sodium thiosulfate.

(6) Method for Quantifying Reducing Agent (Sodium Hydrogensulfite)

To 10 ml of a 0.1 N aqueous iodine was added 2.5 ml of a 23% hydrochloric acid, and 5 g of the prepared acrylic acid-based polymer was accurately weighed and added to the solution, and sufficiently mixed. After the mixture was allowed to stand in a cool and dark place for 10 minutes, the mixture was titrated with 0.1 N sodium thiosulfate. The amount of a reducing agent was obtained in accordance with the equation:

$$[\text{Amount of reducing agent (\% by weight)}]$$
$$= [(\text{Blank} - \text{Amount of sodium thiosulfate titrated}) \times 0.1 \times f \times 5.203]$$
$$\div [\text{Amount of sample}]$$

wherein f is the same as above.

Example 1

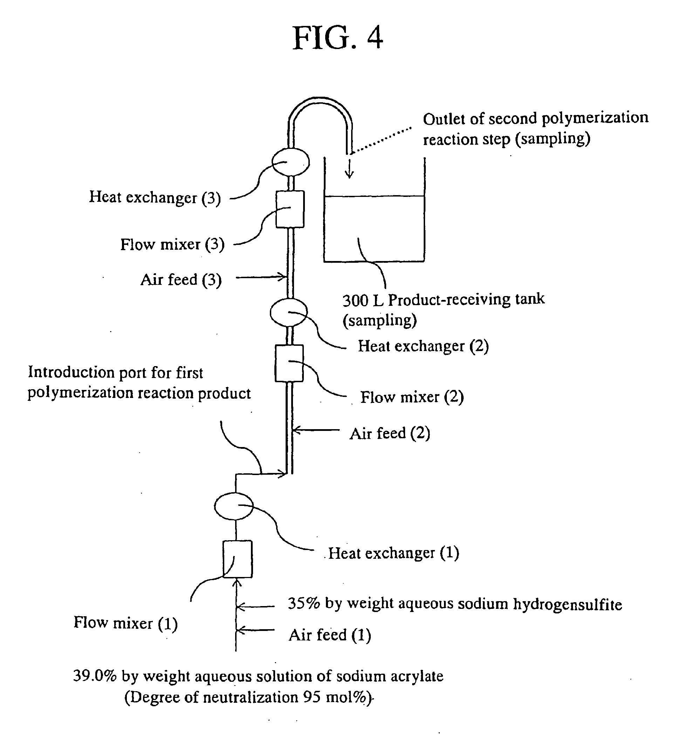

Using an apparatus as shown in Figure 4, as the first polymerization reaction step, a 39.0% by weight aqueous solution of sodium acrylate (20°C, pH of 6.3 and neutralization degree of 95% by mol) and a 35% by weight aqueous solution of sodium hydrogensulfite (5.5% by mol relative to acrylic acid) were introduced into a flow mixer (1) with a metering pump, and air as a gas (from air feed (1)) with a compressor at flow rates of 71.4 kg/h [60 L/h], 4.89 kg/h [3.76 L/h] and 1.2 Nm$^3$/h, respectively.

A honeycomb plate static mixer (manufactured by KANKYOKAGAKU Corporation under the trade name: Lamond Super Mixer and Model No.: 03, having plate 2 units) was used as the flow mixer (1) and a spiral heat exchanger with a heat transfer area of 0.3 m$^2$ was used as a heat exchanger (1), wherein a liquid-gas ratio was controlled to 19 (= 1200[L/h]/63.8 [L/h]). The pressure at the inlet of the flow mixer (1) was 0.45 MPa, the temperature at the outlet thereof was 60°C, and the polymerization ratio at the introduction port of a first polymerization reaction product was 68%.

As the second polymerization reaction step, there was used a reaction portion in which a flow mixer and a heat exchanger were arranged in order serially in two stages (flow mixer (2)-heat exchanger (2)-flow mixer (3)-heat exchanger (3)) in a 3/4 B pipe (length: 5.5 m). The air (air feeds (2) and (3)) for accelerating the reaction was fed to the positions before each of the mixers.

As the flow mixer (2), there was used an orifice plate static mixer (manufactured by Fujikin Incorporated under the trade name: Bunsan-kun, Model No.: 25D, number of plates: 15 pairs-30 plates). As the flow mixer (3), there was used a lattice plate static mixer manufactured by the same company (trade name: Kongo-kun, Model No.: 25M, number of plates: 15 pairs-30 plates). As the heat exchangers (2) and (3), spiral heat exchangers each having a heat transfer area of 0.3 m$^2$ were used. Flow rates of the air fed to the positions before each of the mixers were 4.2 Nm$^3$/h in the air feed (2) and 3.0 Nm$^3$/h in the air feed (3).

The reaction product obtained in the first polymerization reaction step was introduced from the introduction port for a first polymerization reaction product into the reaction portion in which the flow mixers (2) and (3) were arranged in two stages. The second polymerization reaction was carried out by supplementing the air from the air feeds (2) and (3), and the obtained second polymerization reaction product was received into a 300 L product-receiving tank. Thereafter, the product was matured for 0.5 hours in the product-receiving tank.

Sampling was carried out at two sites of an outlet of the second polymerization reaction step and the product-receiving tank after the termination of maturation, and analyses of the amount of the unreacted monomer, the amount of the adduct, the molecular weight of the polymer, the solid content and the hue, and calculations of the polymerization ratio and the dispersion index were carried out. In the sampling at the outlet of the second polymerization reaction step after 2.0 hours has passed from the beginning of the procedure, the amount of the unreacted monomer was 1.1% by weight, the amount of the adduct was 1.46% by weight, the polymerization ratio was 95.1%, the weight-average molecular weight was 14700, and the dispersion index was 5.34. In the product-receiving tank, the amount of the unreacted monomer was 0.23% by weight, the amount of the adduct was 1.90% by weight, the polymerization ratio was 96.7% and the weight-average molecular weight was 14980, the dispersion index was 5.47, the solid content was 40.2% by weight and the hue (APHA) was 20.

Example 2

The same procedures as in Example 1 were carried out with the exception that the number of plate units of the static mixer in the first polymerization reaction step was changed from two units to 10 units, and that a liquid-gas ratio was changed from 19 to 100 (air flow rate of 6.38 Nm$^3$/h).

The pressure at the inlet of the flow mixer in the first polymerization reaction step was 1.2 MPa, the temperature at the outlet was 81°C, and the polymerization ratio at the outlet was 93%. However, a flow state was unstable, producing an intermittent flow.

As a result of the analyses of sampling at an outlet of the second polymerization reaction step, the amount of the unreacted monomer was 0.71% by weight, the amount of the adduct was 1.52% by weight, the polymerization ratio was 95.5%, the weight-average molecular weight was 13700, and the dispersion index was 7.25. In addition, in the product-receiving tank, the amount of the unreacted monomer was 0.39% by weight, the amount of the adduct was 1.95% by weight, the polymerization ratio was 96.1%, the weight-average molecular weight was 14500, the dispersion index was 7.68, the solid content was 39.9% by weight, and the hue (APHA) was 20.

Example 3

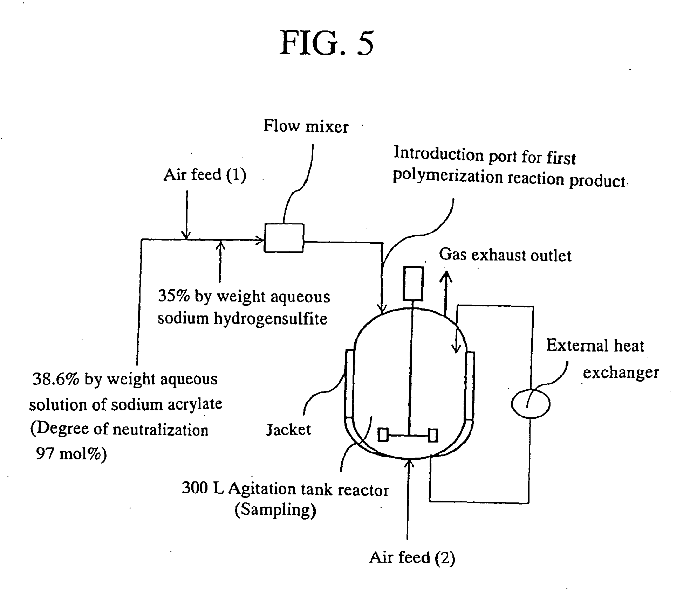

Using an apparatus as shown in Figure 5, as the first polymerization reaction step, a 38.6% by weight aqueous solution of sodium acrylate (20°C, pH of 6.4 and neutralization degree of 97% by mol) and a 35% by weight aqueous solution of sodium hydrogensulfite (5.4% by mol relative to acrylic acid) were introduced into a flow mixer with a metering pump, and air as gas (from air feed (1)) with a compressor at flow rates of 56.4 kg/h [47.4 L/h], 3.75 kg/h [2.88 L/h] and 0.40 Nm$^3$/h, respectively.

The same honeycomb plate static mixer used as in Example 1 was used as the flow mixer, wherein a liquid-gas ratio was controlled to 8 (= 400[L/h]/50.3 [L/h]). The pressure at the inlet of the flow mixer was 0.35 MPa, the temperature at the outlet thereof was 52°C, and the polymerization ratio at the introduction port of the first polymerization reaction product was 62%.

As the second polymerization reaction step, there was used a reaction portion equipped with an agitated tank reactor (capacity: 300 L, turbine impeller, 200 r/min) capable of cooling with a jacket and an external heat exchanger (a spiral heat exchanger having a heat transfer area of 0.3 m$^2$) and being equipped with a gas exhaust. The reaction portion was charged with 64 L of ion-exchanged water at an initial stage. In addition, aeration and agitation procedures were carried out for the second polymerization reaction, while feeding air (air feed (2): 1.5 Nm$^3$/h) for accelerating the reaction from the bottom of the agitated tank.

The reaction product obtained in the first polymerization reaction step was introduced dropwise from the introduction port for a first polymerization reaction product into the agitated tank reactor, and the second polymerization reaction was carried out with aeration and agitation. In addition, the temperature inside the tank was controlled within a range of 30° $\pm$ 5°C by a cooling procedure. The dropwise polymerization procedures were continued for 3.0 hours, and thereafter the reaction product was matured for 0.5 hours.

Sampling was carried out from the agitated tank reactor after the termination of maturation, and analyses of the amount of the unreacted monomer, the amount of the adduct, the molecular weight of the polymer, the solid content and the hue, and calculations of the polymerization ratio and the dispersion index were carried out. As a result, the amount of the unreacted monomer was 0.21% by weight, the amount of the adduct was 1.52% by weight, the polymerization ratio was 96.3%, the weight-average molecular weight was 11020, the dispersion index was 4.85, the solid content was 29.8% by weight and the hue (APHA) was 30.

Example 4

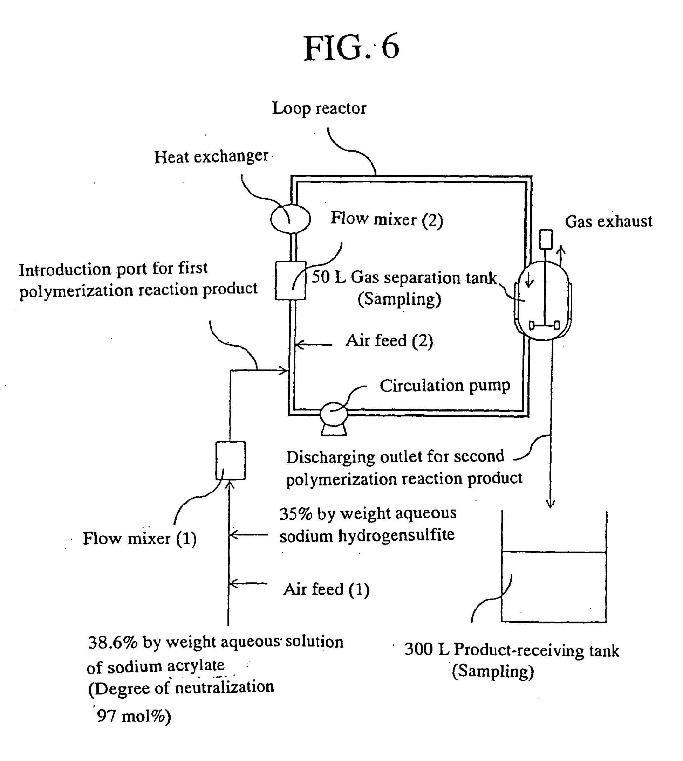

Using an apparatus as shown in Figure 6, as the first polymerization reaction step, a 38.6% by weight aqueous solution of sodium acrylate (20°C, pH of 6.4 and neutralization degree of 97% by mol) and a 35% by weight aqueous solution of sodium hydrogensulfite (3.6% by mol relative to acrylic acid) were introduced into a flow mixer (1) with a metering pump, and air as gas (from air feed (1)) with a compressor at flow rates of 56.4 kg/h [47.4 L/h], 2.50 kg/h [1.92 L/h] and 1.0 Nm$^3$/h, respectively.

As the flow mixer (1), there was used an orifice plate static mixer (manufactured by Fujikin Incorporated under trade name: Bunsan-kun and Model No.: 15D, number of plates: 5 pairs-10 plates), and a liquid-gas ratio was controlled to 20 (= 1000 [L/h]/49.1 [L/h]). The pressure at the inlet of the flow mixer was 0.25 MPa, the temperature at the outlet thereof was 45°C, and the polymerization ratio at the introduction port of the first polymerization reaction product was 50%.

As the second polymerization reaction step, there was used a reaction portion provided with a loop reactor (3/4B pipe x a loop pipe length: 8 m) equipped with a flow mixer (2), a heat exchanger, a 50 L gas separation tank having an agitator and a circulation pump. The reaction portion was charged with a partially neutralized aqueous solution of sodium polyacrylate having a weight-average molecular weight of 10,000, a dispersion index of 3.90 and a solid content of 40.0% by weight. Circulation procedures were carried out for the second polymerization reaction under conditions of 30°C and 520 L/h.

The reaction product obtained in the first polymerization reaction step was introduced into a position before a flow mixer (2) (manufactured by Fujikin Incorporated under the trade name: Bunsan-kun and Model No.: 25D, number of plates: 3 pairs-6 plates) provided in the loop reactor. The gas-liquid mixing thereof with air for accelerating the reaction (from air feed (2): 2.4 Nm$^3$/h) was further carried out, and the removal of the reaction heat with a heat exchanger and degassing with a gas separation tank were carried out, and the circulation procedures were carried out for the second polymerization reaction. The circulation pressure was controlled at 0.15 MPa on the discharge side of the circulation pump, the temperature in the loop reactor was controlled within the range of 40° $\pm$ 3°C, and the average residence time in the loop reactor was adjusted to 24 minutes. The second polymerization reaction product was received into a 300 L product-receiving tank at the same flow rate as the first polymerization reaction product introduced into the loop reactor, from the discharge outlet of the second polymerization reaction product provided on the gas separation tank.

The above-mentioned procedures were continued for 3.5 hours, and thereafter the continuously obtained second polymerization reaction product was received into a 300 L product-receiving tank, and the reaction product was matured for 0.5 hours. Sampling was carried out at two sites of a 50 L gas separation tank and the 300 L product-receiving tank after the termination of maturation, and analyses of the amount of the unreacted monomer, the amount of the adduct, the molecular weight of the polymer, the solid content and the hue, and calculations of the polymerization ratio and the dispersion index were carried out.

In the sampling at the 50 L gas separation tank after 2.0 hours passed from the beginning of the operation, the amount of the unreacted monomer was 1.14% by weight, the amount of the adduct was 0.53% by weight, the polymerization ratio was 95.3%, the weight-average molecular weight was 9800, and the dispersion index was 3.30. In the product-receiving tank, the amount of the unreacted monomer was 0.11% by weight, the amount of the adduct was 0.61% by weight, the polymerization ratio was 98.8% and the weight-average molecular weight was 10250, the dispersion index was 3.80, the solid content was 39.9% by weight and the hue (APHA) was 10.

Example 5

Using an experimental apparatus as shown in Figure 6, the first polymerization reaction and the second polymerization reaction were carried out. The molar ratio of acrylic acid to maleic acid (acrylic acid/maleic acid) was adjusted to 8/2.

First, into the flow mixer (1) were introduced a sodium maleate solution having a neutralization degree of 50% by mol (60°C, pH of 4.3, 50.4 kg/h [42.0 L/h], and a theoretical solid content of 10.0%), an aqueous acrylic acid solution having a neutralization degree of 23% by mol (20°C, 22.9 kg/h [21.4 L/h], pH of 4.3 and a theoretical solid content of 64.9%), a 35% aqueous solution of $NaHSO_3$ (3.40 kg/h [1.41 L/h], 5.0% by mol relative to the monomer) and a 30% aqueous solution of sodium persulfate (20°C, 9.20 kg/h [7.7 L/h] and 5.0% by mol relative to the monomer) with metering pumps, and air (1) (at 1.0 $Nm^3$/h) with a compressor, each at a flow rate shown in the parenthesis to start the first polymerization reaction. As the flow mixer (1) used in the first polymerization reaction step, there was used an orifice plate static mixer (manufactured by Fujikin Incorporated under the trade name: Bunsan-kun and Model No.: 15D, number of plates: 5 pairs-10 plates), and a liquid-gas ratio was 14 (= 1000 [L/h]/72.5 [L/h]). The pressure at the inlet of the flow mixer was 0.20 MPa, the temperature at the outlet thereof was 80°C, and polymerization ratios were 86.4% for acrylic acid and 44.9% for maleic acid.

In the second polymerization reaction step, there was used a loop reactor (a 3/4B pipe x a loop pipe length: 8 m) equipped with a mixing portion, a gas feeding portion, a heat exchanger, a 50 L gas separation tank having an agitator and a circulation pump, and the reactor was charged with an aqueous solution of a partially neutralized sodium salt of a copolymer of acrylic acid and maleic acid having a weight-average molecular weight of 10,000, a dispersion index of 3.90 and a solid content of 30.0% by weight, and in the same compositional ratio as in the first polymerization reaction step, and circulation procedures for the second polymerization reaction were carried out under conditions of 80°C and 520 L/h.

The reaction product obtained in the first polymerization reaction step was introduced into a position before a flow mixer (2) (manufactured by Fujikin Incorporated under the trade name: Bunsan-kun and Model No.: 25D, number of plates: 3 pairs-6 plates) provided in the loop reactor. The gas-liquid mixing thereof with air (from air feed (2): 2.4 $Nm^3$/h) was further carried out, and the circulation procedures were carried out by removing the reaction heat with a heat exchanger and degassing with a gas separation tank. The circulation pressure was controlled at 0.12 MPa on the discharge side of the circulation pump, the temperature in the loop reactor was controlled within the range of 80° ± 3°C, and the average residence time in the loop reactor was adjusted to 60 minutes. The reaction product was discharged continuously from the gas separation tank at the same flow rate as the first polymerization reaction product introduced into the loop reactor.

The above-mentioned procedures were continued for 3.5 hours, and thereafter the continuously obtained aqueous solution of sodium salt of a copolymer of acrylic acid and maleic acid was received into a 300 L product-receiving tank, and the reaction product was matured for 0.5 hours. Sampling was carried out at two sites of a 50 L gas separation tank and the 300 L product-receiving tank after the termination of maturation, and analyses of the polymerization ratio (unreacted monomer), the molecular weight (distribution), the solid content and the hue were carried out.

In the sampling at the 50 L gas separation tank after 2.0 hours passed from the beginning of the operation, the polymerization ratios were 98.6% for acrylic acid (unreacted monomer: 0.20% by weight) and 85.7% for maleic acid (unreacted monomer: 0.63% by weight), the weight-average molecular weight was 9900, and the dispersion index was 3.8. In addition, in the product-receiving tank, the polymerization ratios were 99.9% for acrylic acid (unreacted monomer: 0.003% by weight) and 88.9% for maleic acid (unreacted monomer: 0.50% by weight), the weight-average molecular weight was 10200, the dispersion index was 3.80, the solid content was 32.0% by weight, and the hue (APHA) was 50.

Preparation Example 1

To 75.0 kg of a 80% by weight aqueous acrylic acid solution containing 200 mg of methoquinone per 1 kg of acrylic acid were added 90.4 kg of a 35% by weight aqueous sodium hydroxide and 34.6 kg of ion-exchange water so that the acrylic acid concentration became 30.0% by weight and the neutralization degree of acrylic acid became 95% to give an aqueous solution of sodium acrylate.

The reaction was carried out in the same manner as in Example 4 to give 200 kg of an aqueous solution of the sodium acrylate polymer.

In addition, the aqueous solution of the polymer obtained was dried under drying conditions of 105°C and 2 hours to quantify its solid content.

As a result, 200 kg of a 40% by weight aqueous solution of the sodium acrylate polymer having a neutralization degree of 95% by mol was obtained.

The weight-average molecular weight of the sodium acrylate polymer obtained was determined in accordance with the above-mentioned method. As a result, the weight-average molecular weight was 9500.

Also, the concentration of methoquinone contained in the obtained sodium acrylate polymer was determined in accordance with high-performance liquid chromatography mentioned above. As a result, the concentration was 163 mg per 1 kg of acrylic acid constituting the acrylic acid-based polymer.

## Example 6

A 300 L reaction tank was charged with 200 kg of a 40% by weight aqueous solution of the sodium acrylate polymer obtained in the same manner as in Preparation Example 1 and 1.97 kg of a 35% by weight aqueous sodium hydroxide, and the pH was adjusted to 12.0. Thereafter, 0.29 kg of a 35% by weight aqueous hydrogen peroxide (1690 mg per 1 kg of acrylic acid constituting the sodium acrylate polymer) was added to the solution while agitating the solution homogeneously at 40°C.

The resulting aqueous solution was agitated for 30 minutes, and thereafter the concentration of methoquinone in the solution was determined. As a result, the concentration was 10 mg per 1 kg of acrylic acid constituting the sodium acrylate polymer.

Next, 175 parts by weight of an aqueous solution of the sodium acrylate polymer, 125 parts by weight of sodium carbonate, 110 parts by weight of sodium sulfate, 5 parts by weight of sodium sulfite, 143 parts by weight of zeolite, 40 parts by weight of sodium chloride, 2 parts by weight of a fluorescer and 453 parts by weight of water were mixed together, and the alkaline prepared solution obtained was spray-dried by hot air stream at 220°C in a spray-dryer. As a result, a colorless dry powder was obtained.

Subsequently, 100 g of the dry powder obtained was mixed with 50 g of a surfactant (sodium alkylbenzenesulfonate) to prepare a detergent composition. Even in this case, no phenomenon of coloration was observed.

## Example 7

The same procedures as in Example 6 were carried out except that 1.14 kg of a 35% by weight aqueous hydrogen peroxide (6650 mg per 1 kg of acrylic acid constituting the sodium acrylate polymer) was used in place of 0.29 kg of a 35% by weight aqueous hydrogen peroxide used in Example 6.

After the aqueous solution obtained was stirred for 30 minutes, the concentration of methoquinone in the aqueous solution was determined. As a result, the concentration was less than 3.5 mg per 1 kg of acrylic acid constituting the acrylic acid-based polymer.

Using the aqueous solution of the sodium acrylate polymer obtained, the alkaline prepared solution was spray-dried by hot air stream at 220°C in a spray-dryer in the same manner as in Example 6. As a result, a colorless dry powder was obtained. Also, this dry powder was mixed with a surfactant to prepare a detergent composition in the same manner as in Example 6. Even in this case, no coloration was observed.

## Example 8

A 300 L reaction tank was charged with 200 kg of a 40% by weight aqueous solution of the sodium acrylate polymer obtained in the same manner as in Preparation Example 1 and 0.57 kg of a 35% by weight aqueous sodium hydroxide, and the pH was adjusted to 8.2. Thereafter, 1.71 kg of a 35% by weight aqueous hydrogen peroxide (9980 mg per 1 kg of acrylic acid constituting the sodium acrylate polymer) was added to the solution while agitating the solution homogeneously at 40°C.

The concentration of methoquinone after 24 hours passed was 15 mg per 1 kg of acrylic acid constituting the sodium acrylate polymer.

Using the aqueous solution of the sodium acrylate polymer obtained, the alkaline prepared solution was spray-dried by hot air stream at 220°C in a spray-dryer in the same manner as in Example 6. As a result, a colorless dry powder was obtained. Also, the dry powder obtained was mixed with a surfactant to prepare a detergent composition in the same manner as in Example 6. Even in this case, no coloration was observed.

## Example 9

A 300 L reaction tank was charged with 200 kg of a 40% by weight aqueous solution of the sodium acrylate polymer obtained in the same manner as in Preparation Example 1 and 2.91 kg of a 35% by weight aqueous sodium hydroxide, and the pH was adjusted to 13.5. Thereafter, 1.71 kg of a 35% by weight aqueous hydrogen peroxide (9980 mg per 1 kg of acrylic acid constituting the sodium acrylate polymer) was added to the solution while agitating the solution homogeneously at 40°C.

The resulting aqueous solution was agitated for 3 hours, and thereafter the concentration of methoquinone in the solution was determined. As a result, the concentration was less than 3.5 mg per 1 kg of acrylic acid constituting the sodium acrylate polymer.

Using the aqueous solution of the sodium acrylate polymer obtained, the alkaline prepared solution was spray-dried by hot air stream at 220°C in a spray-dryer in the same manner as in Example 6. As a result, a colorless dry powder was obtained. Also, the dry powder obtained was mixed with a surfactant to prepare a detergent composition in the same manner as in Example 6. Even in this case, no coloration was observed.

Example 10

A 300 L reaction tank was charged with 200 kg of a 40% by weight aqueous solution of the sodium acrylate polymer obtained in the same manner as in Preparation Example 1 and 2.31 kg of a 35% by weight aqueous sodium hydroxide, and the pH was adjusted to 12.5. Thereafter, the solution was fed to the top of a 25 L treatment tank at a temperature of 45°C and a flow rate of 1.0 kg/minute, and concurrently a 35% by weight aqueous hydrogen peroxide was added from a separate dropping inlet at the top of the reaction tank at a flow rate of 0.0057 kg/minute (6720 mg per 1 kg of acrylic acid constituting the sodium acrylate polymer) to the solution while agitating the solution homogeneously.

The treatment time inside the reaction tank was set at 20 minutes, and the treated aqueous solution was discharged from a discharging outlet at the bottom of the reaction tank, and continuous procedures were carried out by keeping the liquid surface level constantly. The concentration of methoquinone at the discharging outlet was determined with the passage of time. As a result, the concentration was less than 3.5 mg per 1 kg of acrylic acid constituting the sodium acrylate polymer.

Using the aqueous solution of the sodium acrylate polymer obtained, the alkaline prepared solution was spray-dried by hot air stream at 220°C in a spray-dryer in the same manner as in Example 6. As a result, a colorless dry powder was obtained. Also, the dry powder obtained was mixed with a surfactant to prepare a detergent composition in the same manner as in Example 6. Even in this case, no coloration was observed.

Example 11

A 300 L reaction tank was charged with 200 kg of a 40% by weight aqueous solution of the sodium acrylate polymer obtained in the same manner as in Example 4 and 1.45 kg of a 11.4% by weight sodium hypochlorite (2760 mg per 1 kg of acrylic acid constituting the sodium acrylate polymer) was added to the solution while agitating the solution homogeneously. The mixture was stirred at 25°C for 1 hour, and thereafter the concentration of methoquinone was determined. The concentration was less than 3.5 mg per 1 kg of acrylic acid constituting the sodium acrylate polymer.

Next, using the aqueous solution of the sodium acrylate polymer obtained, the alkaline prepared solution was spray-dried by hot air stream at 220°C in a spray-dryer in the same manner as in Example 6. As a result, a colorless dry powder was obtained. Also, the dry powder obtained was mixed with a surfactant to prepare a detergent composition in the same manner as in Example 6. Even in this case, no coloration was observed.

Example 12

A 300 L reaction tank was charged with 200 kg of a 40% by weight aqueous solution of the sodium acrylate polymer obtained in the same manner as in Preparation Example 1, and 10 kg of granular active charcoal [manufactured by Mitsubishi Chemical K.K. under the trade name: S80S] (166 g per 1 kg of acrylic acid constituting the sodium acrylate polymer) was added to the reaction tank while agitating the solution homogeneously at 40°C. After the mixture was stirred for 4 hours, the aqueous solution of the sodium acrylate polymer and the active charcoal were separated by filter pressing. The amount of methoquinone in the aqueous solution obtained was determined. As a result, the amount was less than 3.5 mg per 1 kg of acrylic acid constituting the sodium acrylate polymer.

Next, using the aqueous solution of the sodium acrylate polymer obtained, the alkaline prepared solution was spray-dried by hot air stream at 220°C in a spray-dryer in the same manner as in Example 6. As a result, a colorless dry powder was obtained. Also, the dry powder obtained was mixed with a surfactant to prepare a detergent composition in the same manner as in Example 6. Even in this case, no coloration was observed.

Example 13

A 300 L reaction tank was charged with 200 kg of a 40% by weight aqueous solution of the sodium acrylate polymer obtained in the same manner as in Example 4, and 36 kg of granular active charcoal [manufactured by Mitsubishi Chemical K.K. under the trade name: S80S] (600 g per 1 kg of acrylic acid constituting the sodium acrylate polymer) was added to the reaction tank, while agitating the solution homogeneously at 40°C. After the mixture was stirred for 1 hour, the aqueous solution of the sodium acrylate polymer and the active charcoal were separated by filter pressing. The amount of methoquinone in the aqueous solution obtained was determined. As a result, the amount was less than 3.5 mg per 1 kg of acrylic acid constituting the sodium acrylate polymer.

Next, using the aqueous solution of the sodium acrylate polymer obtained, the alkaline prepared solution was spray-dried by hot air stream at 220°C in a spray-dryer in the same manner as in Example 6. As a result, a colorless dry powder was obtained. Also, the dry powder obtained was mixed with a surfactant to prepare a detergent composition in the same manner as in Example 6. Even in this case, no coloration was observed.

Example 14

The alkaline prepared solution was spray-dried by hot air stream at 220°C in a spray-dryer in the same manner as in Example 6, except that 200 kg of a 40% by weight aqueous solution of the sodium acrylate polymer obtained in Preparation Example 1 was directly used in place of the aqueous solution of the sodium acrylate polymer in the paragraph of [dry powder and detergent composition] of Example 6. As a result, a dry powder colored pink was obtained.

Next, 100 g of the dry powder obtained was mixed with 50 g of a surfactant (sodium alkylbenzenesulfonate). As a result, a colored detergent composition was obtained.

Example 15

The pH of the 40% by weight aqueous solution of the sodium acrylate polymer obtained in Preparation Example 1 was determined. As a result, the pH was 6.3.

A 300 L reaction tank was charged with 200 kg of this aqueous solution of the sodium acrylate polymer, and to this aqueous solution was added 0.29 kg of a 35% by weight aqueous sodium peroxide (1690 mg per 1 kg of acrylic acid constituting the sodium acrylate polymer), without adjusting the pH of the aqueous solution while agitating the solution homogeneously at 40°C. After agitating the solution for 24 hours, the concentration of methoquinone was determined. As a result, the concentration was 50 mg per 1 kg of acrylic acid constituting the sodium acrylate polymer.

The alkaline prepared solution was spray-dried by hot air stream at 220°C in a spray-dryer in the same manner as in Example 6, except that the obtained aqueous solution of the sodium acrylate polymer was used in place of the aqueous solution of the sodium acrylate polymer in the paragraph of [dry powder and detergent composition] of Example 6. As a result, a dry powder colored pink was obtained.

Next, 100 g of the dry powder obtained was mixed with 50 g of a surfactant (sodium alkylbenzenesulfonate). As a result, a colored detergent composition was obtained.

Example 16

The same procedures as in Example 6 were carried out except that 0.029 kg of a 35% by weight aqueous hydrogen peroxide (170 mg per 1 kg of acrylic acid constituting the sodium acrylate polymer) was added in Example 6. The concentration of methoquinone after agitating the solution obtained for 24 hours was 35 mg per 1 kg of acrylic acid constituting the sodium acrylate polymer.

The alkaline prepared solution was spray-dried by hot air stream at 220°C in a spray-dryer in the same manner as in Example 6, except that the obtained aqueous solution of the sodium acrylate polymer was used in place of the aqueous solution of the sodium acrylate polymer in the paragraph of [dry powder and detergent composition] of Example 6. As a result, a dry powder colored pink was obtained.

Next, 100 g of this dry powder was mixed with 50 g of a surfactant (sodium alkylbenzenesulfonate). As a result, a colored detergent composition was obtained.

Example 17

The amount of hydrogen peroxide remaining in 200 kg of the aqueous solution of the sodium acrylate polymer obtained in Example 6 was 0.02% by weight (0.048 parts by weight of hydrogen peroxide based on 100 parts by weight of the polymer). Sodium hydrogensulfite was added thereto in an amount of 1.05-fold molar equivalent of the amount of the remaining hydrogen peroxide to completely deactivate hydrogen peroxide. Further, 2 kg of sodium hydrogensulfite was added thereto so that 1% by weight of sodium hydrogensulfite existed in this aqueous solution of the sodium acrylate polymer (2.5 parts by weight of sodium hydrogensulfite based on 100 parts by weight of the polymer). The hue (APHA) immediately after the preparation was 10, and the pH was 7.2. The product was stored at 40°C for 30 days, so that the hue (APHA) was 10.

Example 18

The same procedures as in Example 14 were carried out except that 6 kg of sodium hydrogensulfite was added so that sodium hydrogensulfite existed in an amount of 3% by weight (7.5 parts by weight of sodium hydrogensulfite based on 100 parts by weight of the polymer) in Example 14. The hue (APHA) immediately after the preparation was 20, and the pH was 6.8. The product was stored at 40°C for 30 days, so that the hue (APHA) was 20.

Example 19

The same procedures as in Example 14 were carried out except that 0.6 kg of sodium hydrogensulfite was added so that sodium hydrogensulfite existed in an amount of 0.3% by weight (0.75 parts by weight of sodium hydrogensulfite based on 100 parts by weight of the polymer) in Example 14. The hue (APHA) immediately after the preparation was 10, and the pH was 7.4. The product was stored at 40°C for 30 days, so that the hue (APHA) was 10.

Example 20

The same procedures as in Example 14 were carried out except that sodium hydrogensulfite in Example 14 was not added. The hue (APHA) immediately after the preparation was 10, and the pH was 8.5. The product was stored at 40°C for 30 days, and the hue (APHA) was 400.

Example 21

The same procedures as in Example 14 were carried out except that 0.1 kg of sodium hydrogensulfite was added so that sodium hydrogensulfite existed in an amount of 0.05% by weight (0.125 parts by weight of sodium hydrogensulfite based on 100 parts by weight of the polymer) in Example 14. The hue (APHA) immediately after the preparation was 10, and the pH was 7.9. The product was stored at 40°C for 30 days. As a result, the hue (APHA) was 200.

Comparative Example 1

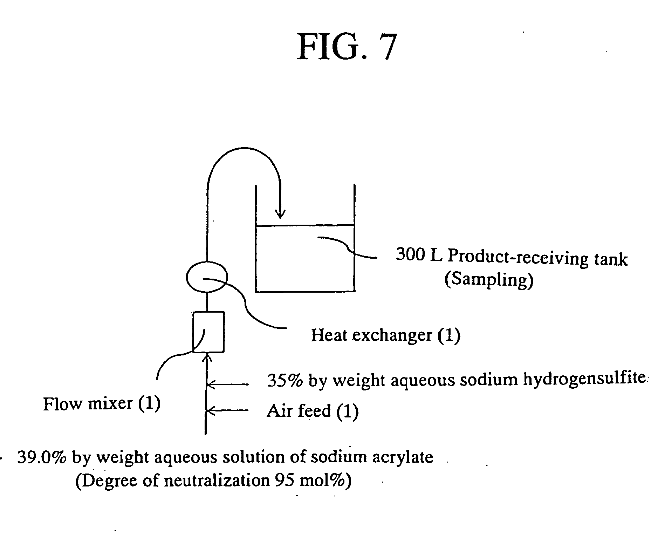

As shown in Figure 7, the first polymerization reaction product was received on a 300 L product-receiving tank without carrying out the second polymerization reaction according to the present invention in Example 1. The product was matured for 0.5 hours. In the sampling from the product-receiving tank, a highly viscous gelated product was formed, so that the product could not be handled as an aqueous solution.

Comparative Example 2

As shown in Figure 7, the first polymerization reaction product was received on a 300 L product-receiving tank without carrying out the second polymerization reaction according to the present invention in Example 2. The product was matured for 0.5 hours. In the sampling from the product-receiving tank, the amount of unreacted monomer was 1.36% by weight, the amount of adduct was 2.05% by weight, the polymerization ratio was 92.6%, the weight-average molecular weight was 20600, and the dispersion index was 8.56.

Comparative Example 3

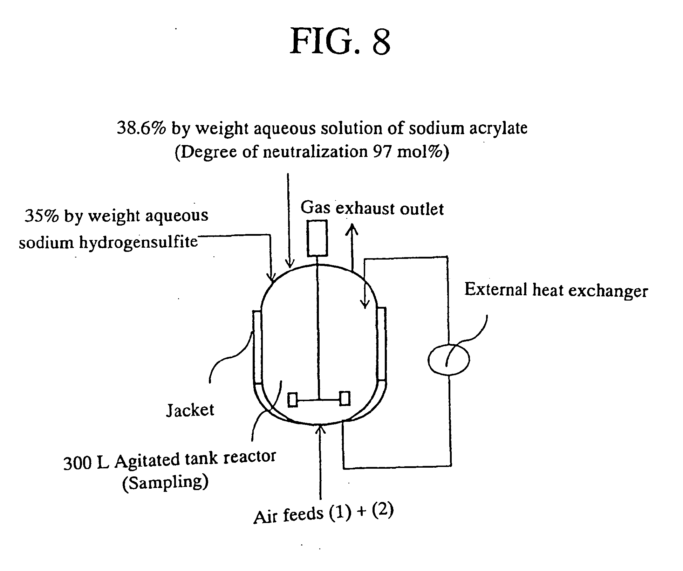

As shown in Figure 8, the polymerization reaction was carried out by directly adding dropwise a 38.6% by weight aqueous solution of sodium acrylate and a 35% by weight aqueous solution of sodium hydrogensulfite to the agitated tank reactor with a metering pump for 3.0 hours at flow rates of 56.4 kg/h and 3.75 kg/h, respectively, without carrying out the first polymerization reaction according to the present invention in Example 3. In addition, with regard to the air necessary for the reaction, the air was fed to the bottom of the agitated tank at air feeds (1) + (2) (1.9 $Nm^3/h$), which are the total amount of the air feed (1) (0.40 $Nm^3/h$) used in the first polymerization reaction step and the air feed (2) (1.5 $Nm^3/h$) in Example 3. After the termination of the dropwise addition, the mixture was matured for 0.5 hours.
Sampling was carried out from the agitated tank reactor, and analyses of the amount of the unreacted monomer, the amount of the adduct, the molecular weight of the polymer, the solid content and the hue, and calculations of the polymerization ratio and the dispersion index were carried out. As a result, the amount of the unreacted monomer was 1.05% by weight, the amount of the adduct was 4.30% by weight, the polymerization ratio was 87.3%, the weight-average molecular weight was 28100, the dispersion index was 13.56, the solid content was 29.9% by weight and the hue (APHA) was 50.

Comparative Example 4

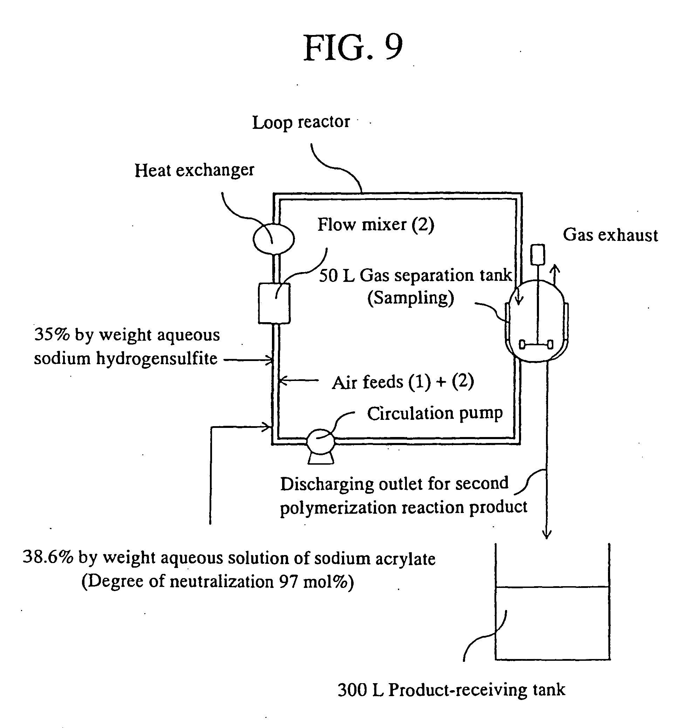

As shown in Figure 9, the polymerization reaction was carried out by directly feeding a 38.6% by weight aqueous solution of sodium acrylate, a 35% by weight aqueous solution of sodium hydrogensulfite and the air to the loop reactor at flow rates of 56.4 kg/h, 2.49 kg/h and 3.4 Nm$^3$/h, respectively, without carrying out the first polymerization reaction according to the present invention in Example 4, and subjecting to circulation procedures. With regard to the air necessary for the reaction, the air was fed to the loop tank at air feeds (1) + (2) (3.4 Nm$^3$/h), which are the total amount of the air feed (1) (1.0 Nm$^3$/h) used in the first polymerization reaction step and the air feed (2) (2.4 Nm$^3$/h) in Example 4. The circulation pressure continued to increase immediately after the beginning of the operation, and the circulation could not be carried out after 1.0 hour passed from the beginning of the operation. In the sampling at the site of a 50 L gas separation tank after 0.5 hours passed from the beginning of the operation, the amount of the unreacted monomer was 2.07% by weight, the amount of the adduct was 2.53% by weight, the polymerization ratio was 89.5%, the weight-average molecular weight was 158000, and the dispersion index was 17.65.

Comparative Example 5

The reaction was carried out under the same conditions as in Example 5 except that sodium persulfate was not added in Example 5. Sampling was carried out from a 300 L product-receiving tank to perform polymerization ratio (unreacted monomer), molecular weight (distribution), solid content and hue. As a result, the polymerization ratios were 26.7% for acrylic acid (unreacted monomer: 18.15% by weight) and 0% for maleic acid (unreacted monomer: 6.7% by weight), the weight-average molecular weight was 52500, the dispersion index was 6.1, the solid content was 32.0% by weight and the hue (APHA) was 10.

INDUSTRIAL APPLICABILITY

According to the process of the present invention, since a flow mixer is used, the first polymerization reaction can be carried out in a high initiation efficiency though the amount of gas containing oxygen is significantly reduced, and a polymer having a high quality with suppressed coloration and containing a reduced amount of an adduct can be productively prepared by further introducing the obtained reaction product into the second polymerization reaction step. Moreover, clogging in a flow mixer can be prevented by using a gas-liquid system of an aqueous solution containing a hydrogensulfite and a gas containing oxygen.

According to the process of the present invention, even in the case where an alkaline prepared solution containing a carboxylic acid-based polymer obtained by the polymerization with a redox initiator, an inorganic salt such as sodium carbonate, sodium sulfite, sodium sulfate, zeolite or sodium chloride is thermally dried and the dried product is subjected to a thermal history, coloration of a product being dried can be suppressed, so that for example, hue of a detergent composition can be improved.

In addition, according to the present invention, coloration of a carboxylic acid-based polymer can be suppressed during storage thereof irrespective of pH.

**Claims**

**1.** A process for preparing a carboxylic acid-based polymer comprising the steps of:

(A) a first polymerization reaction step comprising introducing an aqueous solution of monomers containing an α-unsaturated carboxylic acid or a salt thereof, an aqueous solution containing a hydrogensulfite, and a gas containing oxygen into a flow mixer to polymerize the monomers; and
(B) a second polymerization reaction step comprising further polymerizing a reaction product containing the unreacted monomer obtained in the first polymerization reaction step.

**2.** The process according to claim 1, wherein the polymerization ratio in the first polymerization reaction step is 30 to 90%.

**3.** The process according to claim 1 or 2, wherein the ratio of the volume of the gas containing oxygen in the standard state to the total volume of the aqueous solution of the monomers and the aqueous solution containing a hydrogensulfite (liquid-gas ratio = volume of gas/volume of liquid) is 1 to 300 in the first polymerization reaction step.

4. The process according to any one of claims 1 to 3, wherein at least one reaction portion selected from the group consisting of a reaction portion provided with a flow mixer, a reaction portion provided with an agitated tank reactor, and a reaction portion provided with a loop reactor is used.

5. The process according to any one of claims 1 to 4, further comprising introducing a peroxide into the flow mixer.

6. The process according to any one of claims 1 to 5, wherein the $\alpha$-unsaturated carboxylic acid or a salt thereof is an $\alpha$-unsaturated carboxylic acid or a salt thereof containing a quinone compound, and the resulting carboxylic acid-based polymer and an oxidizing agent are mixed or the carboxylic acid-based polymer is contacted with an adsorbent, whereby the content of the quinone compound is reduced to 20 mg or less per 1 kg of the $\alpha$-unsaturated carboxylic acid constituting the carboxylic acid-based polymer.

7. The process according to any one of claims 1 to 6, wherein a reducing agent is included in the reaction system in an amount of at least 0.25 parts by weight based on 100 parts by weight of the resulting carboxylic acid-based polymer.

8. The process according to any one of claims 1 to 7, wherein the carboxylic acid-based polymer is an acrylic acid-based polymer.

**Patentansprüche**

1. Verfahren zur Erzeugung eines Polymers auf Carbonsäurebasis, umfassend die folgenden Schritte:

(A) einen ersten Polymerisationsreaktionsschritt, umfassend das Einfügen einer wässrigen Lösung aus Monomeren, die eine $\alpha$-ungesättigte Carbonsäure oder ein Salz davon enthalten, einer wässrigen Lösung mit einem Hydrogensulfit und eines Gases mit Sauerstoff in einen Fließmischer zum Polymerisieren der Monomere; und
(B) einen zweiten Polymerisationsreaktionsschritt, umfassend das weitere Polymerisieren eines Reaktionsproduktes, umfassend das nicht reagierte Monomer, das im ersten Polymerisationsreaktionsschritt erhalten ist.

2. Verfahren nach Anspruch 1, worin das Polymerisationsverhältnis im ersten Polymerisationsreaktionsschritt 30 bis 90% ist.

3. Verfahren nach Anspruch 1 oder 2, worin das Volumenverhältnis des Gases mit Sauerstoff in dem Standardzustand zum Gesamtvolumen der wässrigen Lösung aus den Monomeren und der wässrigen Lösung mit einem Hydrogensulfit (Flüssig-Gas-Verhältnis = Gasvolumen/Flüssigvolumen) 1 bis 300 im ersten Polymerisationsreaktionsschritt ist.

4. Verfahren nach einem der Ansprüche 1 bis 3, worin zumindest ein Reaktionsbereich, ausgewählt aus der Gruppe bestehend aus einem Reaktionsbereich, der mit einem Fließmischer versehen ist, einem Reaktionsbereich, der mit einem gerührten Behälterreaktor versehen ist, und einem Reaktionsbereich, der mit einem Kreislaufreaktor versehen ist, verwendet wird.

5. Verfahren nach einem der Ansprüche 1 bis 4, weiterhin umfassend das Einfügen eines Peroxides in den Fließmischer.

6. Verfahren nach einem der Ansprüche 1 bis 5, worin die $\alpha$-ungesättigte Carbonsäure oder ein Salz davon eine $\alpha$-ungesättigte Carbonsäure oder ein Salz davon ist, umfassend eine Chinonverbindung, und das resultierende Polymer auf Carbonsäurebasis und ein Oxidationsmittel gemischt werden oder das Polymer auf Carbonsäurebasis mit einem Adsorber kontaktiert wird, worin der Gehalt der Chinonverbindung auf 20 mg oder weniger pro 1 kg der $\alpha$-ungesättigten Carbonsäure reduziert wird, die das Polymer auf Carbonsäurebasis ausmacht.

7. Verfahren nach einem der Ansprüche 1 bis 6, worin ein Reduktionsmittel im Reaktionssystem in einer Menge von wenigstens 0,25 Gewichtsteilen, bezogen auf 100 Gewichtsteilen des resultierenden Polymers auf Carbonsäurebasis, enthalten ist.

8. Verfahren nach einem der Ansprüche 1 bis 7, worin das Polymer auf Carbonsäurebasis ein Polymer auf Acrylsäurebasis ist.

**Revendications**

1. Procédé pour préparer un polymère à base d'acide carboxylique comprenant les étapes consistant en :

   (A) une première étape de réaction de polymérisation comprenant d'introduire une solution aqueuse de monomères contenant un acide carboxylique insaturé en $\alpha$ ou un sel de celui-ci, une solution aqueuse contenant un hydrogénosulfite, et un gaz contenant de l'oxygène dans un mélangeur continu à courant pour polymériser les monomères ; et
   (B) une seconde étape de réaction de polymérisation comprenant en outre de polymériser un produit de réaction contenant le monomère non réagi obtenu dans la première étape de réaction de polymérisation.

2. Procédé selon la revendication 1, dans lequel le rapport de polymérisation dans la première étape de réaction de polymérisation est de 30 à 90 %.

3. Procédé selon la revendication 1 ou 2, dans lequel le rapport du volume du gaz contenant de l'oxygène à l'état standard sur le volume de la solution aqueuse des monomères et de la solution aqueuse contenant un hydrogénosulfite (rapport gaz-liquide = volume de gaz/volume de liquide) est de 1 à 300 dans la première étape de réaction de polymérisation.

4. Procédé selon l'une quelconque des revendications 1 à 3, dans lequel au moins une partie de réaction choisie dans le groupe constitué par une partie de réaction prévue avec un mélangeur continu à courant, une partie de réaction prévue avec un réacteur à réservoir agité, et une partie de réaction prévue avec un réacteur à boucle est utilisé.

5. Procédé selon l'une quelconque des revendications 1 à 4, comprenant en outre d'introduire un peroxyde dans le mélangeur continu à courant.

6. Procédé selon l'une quelconque des revendications 1 à 5, dans lequel l'acide carboxylique insaturé en $\alpha$ ou un sel de celui-ci est un acide carboxylique insaturé en $\alpha$ ou un sel de celui-ci contenant un composé de quinone, et le polymère à base d'acide carboxylique résultant et un agent oxydant sont mélangés ou le polymère à base d'acide carboxylique est mis en contact avec un adsorbant, par quoi la teneur en composé de quinone est réduite à 20 mg ou moins pour 1 kg de l'acide carboxylique insaturé en $\alpha$ constituant le polymère à base d'acide carboxylique.

7. Procédé selon l'une quelconque des revendications 1 à 6, dans lequel un agent réducteur est inclut dans le système de réaction en une quantité d'au moins 0,25 parties en poids sur la base de 100 parties en poids du polymère à base d'acide carboxylique résultant.

8. Procédé selon l'une quelconque des revendications 1 à 7, dans lequel le polymère à base d'acide carboxylique est un polymère à base d'acide acrylique.

# FIG. 1

8a   Heat exchanger (2)

7a   Flow mixer (2)

5a   Introduction port for first
     polymerization reaction product

9a   Product-receiving tank

6a   Gas feeding inlet (2)

4a   Flow mixer (1)

3a   Feeding inlet for aqueous
     hydrogensulfite

2a   Gas feeding inlet (1)

1a   Feeding inlet for
     raw material monomer

# FIG. 2

2b  Gas feeding inlet (1)  4b  Flow mixer

1b  Feeding inlet for
raw material monomer

3b  Feeding inlet for aqueous
hydrogensulfite

6b  Gas exhaust outlet

5b  Introduction port for first
polymerization reaction product

7b  Jacket

8b  Agitated tank reactor

9b  Gas feeding inlet (2)

# FIG. 3

6c Loop reactor    12c Gas-liquid separator

11c Heat exchanger

10c Flow mixer (2)

5c Introduction port for first
polymerization reaction
product

9c Gas feeding inlet (2)

8c Circulation pump

7c Introduction port for
second polymerization
reaction product

3c Feeding inlet for
aqueous hydrogensulfite

4c Flow mixer (1)

2c Gas feeding inlet (1)

1c Feeding inlet for
raw material monomer

13c Product-receiving tank

# FIG. 4

Outlet of second polymerization
reaction step (sampling)

Heat exchanger (3)

Flow mixer (3)

Air feed (3)

300 L Product-receiving tank
(sampling)

Heat exchanger (2)

Introduction port for first
polymerization reaction product

Flow mixer (2)

Air feed (2)

Heat exchanger (1)

35% by weight aqueous sodium hydrogensulfite

Flow mixer (1)

Air feed (1)

39.0% by weight aqueous solution of sodium acrylate
(Degree of neutralization 95 mol%)

# FIG. 5

Flow mixer

Air feed (1)

Introduction port for first
polymerization reaction product.

Gas exhaust outlet

35% by weight aqueous
sodium hydrogensulfite

External heat
exchanger

38.6% by weight aqueous
solution of sodium acrylate
(Degree of neutralization
97 mol%)

Jacket

300 L Agitation tank reactor
(Sampling)

Air feed (2)

# FIG. 6

Loop reactor

Heat exchanger

Flow mixer (2)

Gas exhaust

Introduction port for first
polymerization reaction product

50 L Gas separation tank
(Sampling)

Air feed (2)

Circulation pump

Discharging outlet for second
polymerization reaction product

Flow mixer (1)

35% by weight aqueous
sodium hydrogensulfite

Air feed (1)

38.6% by weight aqueous solution
of sodium acrylate
(Degree of neutralization
97 mol%)

300 L Product-receiving tank
(Sampling)

# FIG. 7

300 L Product-receiving tank
(Sampling)

Heat exchanger (1)

35% by weight aqueous sodium hydrogensulfite

Flow mixer (1)

Air feed (1)

· 39.0% by weight aqueous solution of sodium acrylate
(Degree of neutralization 95 mol%)

# FIG. 8

38.6% by weight aqueous solution of sodium acrylate
(Degree of neutralization 97 mol%)

35% by weight aqueous
sodium hydrogensulfite

Gas exhaust outlet

External heat exchanger

Jacket

300 L Agitated tank reactor
(Sampling)

Air feeds (1) + (2)

# FIG. 9

Loop reactor

Heat exchanger

Flow mixer (2)

Gas exhaust

50 L Gas separation tank
(Sampling)

35% by weight aqueous
sodium hydrogensulfite

Air feeds (1) + (2)

Circulation pump

Discharging outlet for second
polymerization reaction product

38.6% by weight aqueous solution of sodium acrylate
(Degree of neutralization 97 mol%)

300 L Product-receiving tank